(19) Europäisches Patentamt
European Patent Office
Office européen des brevets

(11) EP 4 621 867 A1

# (12) EUROPEAN PATENT APPLICATION

(43) Date of publication:
**24.09.2025 Bulletin 2025/39**

(21) Application number: **25158173.2**

(22) Date of filing: **17.02.2025**

(51) International Patent Classification (IPC):
***H01M 4/131*** *(2010.01)* ***H01M 10/0525*** *(2010.01)*
***H01M 10/0567*** *(2010.01)* ***H01M 10/0569*** *(2010.01)*
***B60L 50/64*** *(2019.01)* *H01M 4/02 (2006.01)*
*H01M 10/42 (2006.01)*

(52) Cooperative Patent Classification (CPC):
**H01M 10/0567; B60L 50/64; H01M 4/131; H01M 10/0525; H01M 10/0569;** H01M 2004/021; H01M 2004/028; H01M 2010/4271; H01M 2220/20; H01M 2300/0037

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **19.03.2024 JP 2024044116**

(71) Applicant: **Kabushiki Kaisha Toshiba**
**Tokyo 105-0023 (JP)**

(72) Inventors:
- **KOITABASHI, Yuiko**
  **Minato-ku, Tokyo 105-0023 (JP)**
- **KONDO, Asato**
  **Minato-ku, Tokyo 105-0023 (JP)**
- **UEDA, Kakuya**
  **Minato-ku, Tokyo 105-0023 (JP)**

(74) Representative: **Hoffmann Eitle**
**Patent- und Rechtsanwälte PartmbB**
**Arabellastraße 30**
**81925 München (DE)**

## (54) SECONDARY BATTERY, BATTERY PACK, AND VEHICLE

(57) In general, according to an approach, a secondary battery(31) including a positive electrode(3), a negative electrode(4), and a nonaqueous electrolyte is provided. The positive electrode includes a positive electrode active material-containing layer(3b) containing sulfur atoms. The nonaqueous electrolyte contains a sultone compound and a cyclic carbonate. In gas chromatography mass spectrometry of the nonaqueous electrolyte, in a total ion chromatogram, a ratio B/A of an area B to an area A is in a range of 0 or more and 0.000944 or less. Expression (1) below is satisfied.

$$\text{Expression (1)}: 1 \times 10^{-6} \leq E/M \leq 9 \times 10^{-4}$$

In Expression (1), M denotes a mass (g/$m^3$) of the sulfur atoms per unit volume of the positive electrode active material-containing layer. E denotes a concentration (mol/L) of the sultone compound in the nonaqueous electrolyte.

EP 4 621 867 A1

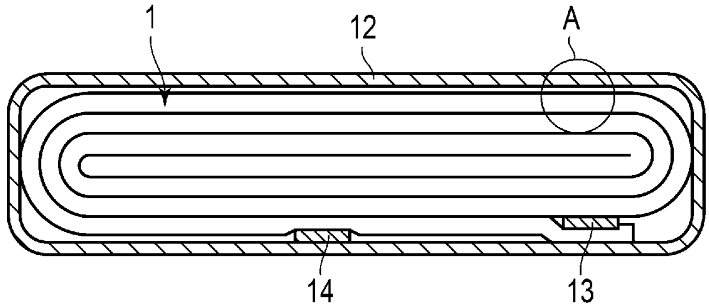


F I G. 1

## Description

FIELD

This disclosure relates generally to a secondary battery, a battery pack, and a vehicle.

BACKGROUND

A secondary battery containing a nonaqueous electrolyte has a problem in high-temperature durability. The reason for this is that the nonaqueous electrolyte and an electrode react with each other to generate gas. When gas is generated, air bubbles are generated inside the electrode, so that an active material may be easily peeled off, the resistance may increase, and the output performance may degrade. A secondary battery containing a nonaqueous electrolyte is particularly likely to generate gas in a high-temperature environment.

BRIEF DESCRIPTION OF DRAWINGS

FIG. 1 is a cross-sectional view of a secondary battery according to an approach taken along a direction perpendicular to an extending direction of a terminal.
FIG. 2 is an enlarged cross-sectional view of a part A shown in FIG. 1.
FIG. 3 is a partially cutaway cross-sectional view of the secondary battery according to the approach.
FIG. 4 is a side view of the battery shown in FIG. 3.
FIG. 5 is a partially cutaway perspective view schematically showing another example of the secondary battery according to the approach.
FIG. 6 is an enlarged cross-sectional view of a part B of the secondary battery shown in FIG. 5.
FIG. 7 is a schematic plan view showing an example of a method for producing the secondary battery according to the approach.
FIG. 8 is an exploded perspective view of a battery pack according to an approach.
FIG. 9 is a block diagram showing an electric circuit of the battery pack shown in FIG. 8.
FIG. 10 is a schematic diagram showing an example of a vehicle including the secondary battery according to the approach.
FIG. 11 is a diagram schematically showing another example of the vehicle according to the approach.
FIG. 12 is a total ion chromatogram showing results of gas chromatography mass spectrometry.
FIG. 13 is an enlarged view of the total ion chromatogram shown in FIG. 12.

DETAILED DESCRIPTION

In general, according to an approach, a secondary battery including a positive electrode, a negative electrode, and a nonaqueous electrolyte is provided. The positive electrode includes a positive electrode active material-containing layer containing sulfur atoms. The nonaqueous electrolyte contains a sultone compound and a cyclic carbonate. In gas chromatography mass spectrometry of the nonaqueous electrolyte, in a total ion chromatogram in which a detection intensity is plotted on a vertical axis and a retention time is plotted on a horizontal axis, a ratio B/A of an area B within a range in which the retention time is 13.5 minutes or more and 14.5 minutes or less to an area A within a range in which the retention time is 15 minutes or more and 18 minutes or less is in a range of 0 or more and 0.000944 or less. Expression (1) below is satisfied.

$$\text{Expression (1): } 1 \times 10^{-6} \leq E/M \leq 9 \times 10^{-4}$$

In Expression (1), M denotes a mass (g/m$^3$) of the sulfur atoms per unit volume of the positive electrode active material-containing layer. E denotes a concentration (mol/L) of the sultone compound in the nonaqueous electrolyte.
According to another approach, a battery pack including the secondary battery according to the approach is provided.
According to another approach, a vehicle including the battery pack according to the approach is provided.

(First Approach)

According to a first approach, a secondary battery including a positive electrode, a negative electrode, and a nonaqueous electrolyte is provided. The positive electrode includes a positive electrode active material-containing layer containing sulfur atoms. The nonaqueous electrolyte contains a sultone compound and a cyclic carbonate. In gas chromatography mass spectrometry of the nonaqueous electrolyte, in a total ion chromatogram in which a detection intensity is plotted on a vertical axis and a retention time is plotted on a horizontal axis, a ratio B/A of an area B within a range in which the retention time is 13.5 minutes or more and 14.5 minutes or less to an area A within a range in which the retention time is 15 minutes or more and 18 minutes or less is in a range of 0 to 0.000944. The following Expression (1) is satisfied.

$$\text{Expression (1): } 1 \times 10^{-6} \leq E/M \leq 9 \times 10^{-4}$$

In Expression (1), M denotes a mass (g/m$^3$) of sulfur atoms per unit volume of the positive electrode active material-containing layer. E denotes a concentration (mol/L) of the sultone compound in the nonaqueous electrolyte.

As a result of intensive studies, the present inventors have found that the high-temperature durability of the secondary battery can be improved by allowing the sultone compound to be present in the nonaqueous electrolyte. This mechanism is presumed as follows.

When the nonaqueous electrolyte and the positive electrode are brought into contact with each other under a high temperature condition, oxidative decomposition of the nonaqueous electrolyte may occur to generate gas. As a result, air bubbles are generated in the positive electrode to increase the resistance, so that the life performance of the secondary battery may degrade.

The secondary battery according to the approach contains the sultone compound in the nonaqueous electrolyte. When the sultone compound is present in the nonaqueous electrolyte, a reaction in which the sultone compound reacts with a positive electrode active material in the positive electrode and decomposes is more likely to proceed than a reaction between a component other than the sultone compound in the nonaqueous electrolyte and the positive electrode active material. In addition, no gas is generated in the decomposition reaction of the sultone compound. That is, since the sultone compound is decomposed in preference to other nonaqueous electrolyte components as a sacrificial material, gas generation due to oxidative decomposition of the nonaqueous electrolyte can be suppressed. Therefore, it is possible to suppress the generation of gas due to the oxidative decomposition of the nonaqueous electrolyte even at a high temperature. Therefore, it is possible to suppress an increase in resistance due to generation of air bubbles in the positive electrode. Therefore, the life performance at a high temperature can be improved.

The positive electrode includes the positive electrode active material-containing layer containing sulfur atoms. The positive electrode active material-containing layer containing sulfur atoms can suppress oxidative decomposition of the nonaqueous electrolyte when the positive electrode active material-containing layer comes into contact with the nonaqueous electrolyte. Therefore, gas generation can be suppressed.

However, sulfur atoms contained in the positive electrode active material-containing layer can be consumed by reacting with the nonaqueous electrolyte. As a result, the effect of suppressing the oxidative decomposition of the nonaqueous electrolyte when the positive electrode active material-containing layer and the nonaqueous electrolyte come into contact with each other is reduced. In addition, a reaction in which sulfur atoms contained in the positive electrode active material-containing layer are consumed consumes electrons, so that potential deviation between the positive and negative electrodes may occur. As a result, the life performance of the secondary battery at a high temperature may degrade.

As a result of intensive studies, the present inventors have found that when sulfur atoms contained in the positive electrode active material-containing layer are consumed, in gas chromatography mass spectrometry of the nonaqueous electrolyte, in a total ion chromatogram in which a detection intensity is plotted on a vertical axis and a retention time is plotted on a horizontal axis, an area B within a range in which the retention time is 13.5 minutes or more and 14.5 minutes or less increases. That is, in the secondary battery having the relatively small area B, a reaction in which sulfur atoms contained in the positive electrode active material-containing layer are consumed is suppressed. From this, the present inventors have found that the life performance of the secondary battery at a high temperature can be improved by keeping the area B relatively small.

In the secondary battery according to the approach, a ratio B/A of the area B within the range in which the retention time is 13.5 minutes or more and 14.5 minutes or less to an area A within a range in which the retention time is 15 minutes or more and 18 minutes or less in the total ion chromatogram of the nonaqueous electrolyte is in a range of 0 to 0.000944. It can be said that, within this range, the area B is kept relatively small. Therefore, the life performance of the secondary battery at a high temperature can be improved.

The secondary battery according to the approach further satisfies the following Expression (1).

$$\text{Expression (1): } 1 \times 10^{-6} \leq E/M \leq 9 \times 10^{-4}$$

In Expression (1), M denotes a mass ($g/m^3$) of sulfur atoms per unit volume of the positive electrode active material-containing layer. E denotes a concentration (mol/L) of the sultone compound in the nonaqueous electrolyte.

In order for the sultone compound to be decomposed in preference to other nonaqueous electrolyte components as a sacrificial material, the sultone compound needs to be present in the nonaqueous electrolyte. In the secondary battery, E/M is higher than or equal to $1 \times 10^{-6}$. In this case, the sultone compound is present in the nonaqueous electrolyte to such an extent that the sultone compound can sufficiently function as a sacrificial material. As a result, gas generation due to oxidative decomposition of the nonaqueous electrolyte can be suppressed.

In addition, since the secondary battery has an E/M of $9 \times 10^{-4}$ or lower, the mass of sulfur atoms per unit volume of the positive electrode active material-containing layer is large. Therefore, even when the positive electrode active material-containing layer and the nonaqueous electrolyte come into contact with each other, gas generation due to oxidative decomposition of the nonaqueous electrolyte can be suppressed.

Therefore, according to the approach, it is possible to provide the secondary battery having high life performance at a high temperature.

The secondary battery according to the approach will be described in more detail with reference to the drawings.

The secondary battery may be, for example, a secondary battery using an alkali metal ion as a carrier ion. For example, the secondary battery may be a lithium battery (lithium ion battery).

The positive electrode active material-containing layer included in the positive electrode can contain a positive electrode active material. The negative electrode may contain a negative electrode active material-containing layer. The negative electrode active material-containing layer can contain a negative electrode active material.

As a result of decomposition of the sultone compound, the positive electrode active material-containing layer contained in the positive electrode contains sulfur atoms. In addition, the negative electrode active material-containing layer that may be contained in the negative electrode may contain sulfur atoms.

Each of the positive electrode active material-containing layer included in the positive electrode and the negative electrode active material-containing layer that may be included in the negative electrode (active material-containing layer) may include a sulfur-containing phase containing sulfur atoms. The sulfur atoms may be derived from a decomposition product of the nonaqueous electrolyte. The sulfur atoms may be derived from a decomposition product of the sultone compound contained in the nonaqueous electrolyte. The sulfur-containing phase may be, for example, a phase containing the decomposition product of the sultone compound.

The sulfur-containing phase may be formed on the active material in the active material-containing layer. The sulfur-containing phase may be a layer formed on the active material, or may be a film covering at least a part of a surface of an active material particle. The sulfur-containing phase may be, for example, a layer located on the surface of the active material-containing layer and interposed between the active material and a separator. The sulfur-containing phase may contain other kinds of atoms in addition to the sulfur atom (S). Examples of the other kinds of atoms include an oxygen atom (O), a carbon atom (C), and the like.

The sulfur-containing phase that may be contained in the positive electrode active material-containing layer and the sulfur-containing phase that may be contained in the negative electrode active material-containing layer may be referred to as a positive electrode sulfur-containing phase and a negative electrode sulfur-containing phase, respectively.

The nonaqueous electrolyte can generate a gas when being in contact with the positive electrode active material in the positive electrode active material-containing layer. When the amount of the positive electrode sulfur-containing phase is relatively large in relation to the positive electrode active material-containing layer, the mass M ($g/m^3$) of sulfur atoms per unit volume of the positive electrode active material-containing layer may increase. Therefore, when the mass M of sulfur atoms per unit volume of the positive electrode active material-containing layer is large, the positive electrode active material contained in the positive electrode active material-containing layer is less likely to come into contact with the nonaqueous electrolyte. Therefore, gas generation can be suppressed.

Examples of the sultone compound contained in the nonaqueous electrolyte include propane sultone (PS; 1,3-propane sultone), 1,4-butane sultone, 1,3-propene sultone, and 2,4-butane sultone. The kind of the sultone compound can be one kind or two or more kinds. The sultone compound preferably contains propane sultone.

FIG. 12 is a total ion chromatogram showing results of gas chromatography mass spectrometry. The vertical axis represents a detection intensity, and the horizontal axis represents a retention time.

A chromatogram a shows a result of gas chromatography mass spectrometry for an example of the nonaqueous electrolyte that may be contained in the secondary battery according to the approach. A chromatogram b shows a result of gas chromatography mass spectrometry of a nonaqueous electrolyte contained in a secondary battery according to another example. The chromatograms a and b are total ion chromatograms obtained by a method described later.

FIG. 13 is an enlarged view of the total ion chromatogram shown in FIG. 12. FIG. 13 shows, in an enlarged manner, the detection intensity on the vertical axis that is in the range of 0 to 200,000, and the retention time in the range of

11 minutes to 17 minutes in the total ion chromatogram shown in FIG. 12.

The area A within the range in which the retention time is longer than or equal to 15 minutes and shorter than or equal to 18 minutes (15 minutes or more and 18 minutes or less), the area B within the range in which the retention time is longer than or equal to 13.5 minutes and shorter than or equal to 14.5 minutes (13.5 minutes or more and 14.5 minutes or less), and an area C within a range in which the retention time is longer than or equal to 11.5 minutes and shorter than or equal to 12.5 minutes (11.5 minutes or more and 12.5 minutes or less) in the total ion chromatogram of the nonaqueous electrolyte can be calculated as follows.

A baseline is drawn on a background in the chromatogram. A region below the baseline is subtracted from the chromatogram. A chart obtained by the above subtraction processing is integrated over a predetermined retention time range as an integration range. For example, to calculate the area A, the chart obtained by the subtraction processing is integrated over the retention time range of 15 minutes to 18 minutes as an integration range. The integral value thus obtained is defined as the area A.

To calculate the area B, the chart is integrated over the retention time range of 13.5 minutes to 14.5 minutes as an integration range. To calculate the area C, the chart is integrated over the retention time range of 11.5 minutes to 12.5 minutes as an integration range. Except for the retention time ranges, the areas B and C can be calculated in the same manner as the area A.

The chromatogram b has a peak Pb2 in the retention time range of 13.5 minutes to 14.5 minutes in addition to a peak Pb1 in the retention time range of 15 minutes to 18 minutes. Therefore, the ratio B/A of the area B within the range in which the retention time is 13.5 minutes or more and 14.5 minutes or less to the area A within the range in which the retention time is 15 minutes or more and 18 minutes or less is higher than 0.000944.

Each of the peaks in the chromatograms is, for example, a signal having a signal-to-noise ratio (S/N ratio, signal/noise ratio) of 3 or greater in the chromatogram.

On the other hand, the chromatogram a has a peak Pa1 in the retention time range of 15 minutes to 18 minutes, but has no peak at the retention time when the chromatogram b has Pb2. That is, the detection intensity of the chromatogram a may remain low over the retention time range of 15 minutes to 18 minutes. Therefore, in the chromatogram a, the ratio B/A of the area B within the range in which the retention time is 13.5 minutes or more and 14.5 minutes or less to the area A within the range in which the retention time is 15 minutes or more and 18 minutes or less is 0 or more and 0.000944 or less.

In addition, each of the chromatograms a and b has a plurality of peaks within the range in which the retention time is 11.5 minutes or more and 12.5 minutes or less. Therefore, in the chromatograms a and b, the ratio C/A of the area C within the range in which the retention time is 11.5 minutes or more and 12.5 minutes or less to the area A is 0.0003 or more.

In the gas chromatography mass spectrometry of the nonaqueous electrolyte, qualitative analysis of a component contained in the nonaqueous electrolyte can be performed based on the positions of the peaks in the total ion chromatogram. In addition, quantitative analysis of the component contained in the nonaqueous electrolyte can be performed based on the areas of the peaks.

For example, in the total ion chromatogram obtained by the gas chromatography mass spectrometry of the nonaqueous electrolyte, a peak of the cyclic carbonate may appear within the range in which the retention time is 15 minutes or more and 18 minutes or less. That is, when the total ion chromatogram of the nonaqueous electrolyte has a peak within the range, it is possible to obtain a qualitative analysis result indicating that the nonaqueous electrolyte contains the cyclic carbonate. In addition, the content of the cyclic carbonate in the nonaqueous electrolyte can be quantified from the area of the peak.

The range in which the peak of the cyclic carbonate appears can be, for example, the range in which the retention range is longer than or equal to 15.0 minutes and shorter than or equal to 18.0 minutes.

The area of the peak within the range in which the retention time is 15 minutes or more and 18 minutes or less can occupy most of the area within the range in which the retention time is 15 minutes or more and 18 minutes or less. The area of the peak is hardly affected by a charge- and-discharge cycle. Therefore, the area A within the range in which the retention time is 15 minutes or more and 18 minutes or less can be used as a reference value for evaluating a relative amount for an area in a specific range in the total ion chromatogram. The area A may be, for example, greater than or equal to 557761000 and less than or equal to 559899000.

When the retention time is within the range of 13.5 minutes to 14.5 minutes, for example, a peak of a propane sulfonic acid ester may appear. The propane sulfonic acid ester may be a substance generated by a reaction in which sulfur atoms contained in the positive electrode active material-containing layer are consumed. For example, the propane sulfonic acid may be a substance generated by the reaction of the positive electrode sulfur-containing phase and a component in the nonaqueous electrolyte. The propane sulfonic acid ester may be generated, for example, when the nonaqueous electrolyte contains propane sultone as the sultone compound. The area B within the range in which the retention time is 13.5 minutes or more and 14.5 minutes or less may be, for example, greater than or equal to 11787.726 and less than or equal to 527376.928.

That is, in the total ion chromatogram of the nonaqueous electrolyte, when the ratio B/A of the area B within the

range in which the retention time is 13.5 minutes or more and 14.5 minutes or less to the area A within the range in which the retention time is 15 minutes or more and 18 minutes or less is 0 or more and 0.000944 or less, the amount of the propane sulfonic acid ester with respect to the amount of the cyclic carbonate contained in the nonaqueous electrolyte may be sufficiently small. Therefore, when B/A is within the above range, a large amount of the positive electrode sulfur-containing phase may remain without being consumed. Therefore, gas generation can be suppressed. The lower limit of B/A may be 0.000000. B/A may be, for example, in a range of 0.00028 to 0.000944.

In the total ion chromatogram of the nonaqueous electrolyte, the ratio C/A of the area C within the range in which the retention time is 11.5 minutes or more and 12.5 minutes or less to the area A may be 0.0003 or more.

After the secondary battery is assembled, when the secondary battery is subjected to initial charging and discharging and aging, a part of the nonaqueous electrolyte may be decomposed. For example, a part of the cyclic carbonate contained in the nonaqueous electrolyte may be decomposed.

In the total ion chromatogram of the nonaqueous electrolyte, for example, a peak of a decomposition product of the cyclic carbonate may appear within the range in which the retention time is 11.5 minutes or more and 12.5 minutes or less. Examples of the degradation product of the cyclic carbonate include 3,5-Dimethyldihydrofuran-2-one. The area C within the range in which the retention time is 11.5 minutes or more and 12.5 minutes or less may be, for example, greater than or equal to 1281000 and less than or equal to 1394000.

That is, in the total ion chromatogram of the nonaqueous electrolyte contained in the secondary battery, the fact that the ratio C/A of the area C within the range in which the retention time is 11.5 minutes or more and 12.5 minutes or less to the area A is higher than or equal to 0.0003 means that the secondary battery is in a state of having undergone initial charging and discharging and aging. C/A may be higher than or equal to 0.0024. The upper limit of C/A is not particularly limited, but may be, for example, 0.0247.

The nonaqueous electrolyte may further contain a chain carbonate in addition to the cyclic carbonate. The nonaqueous electrolyte containing a chain carbonate can increase the mobility of lithium ions. Therefore, the output performance of the secondary battery can be improved. The chain carbonate is preferably, for example, an ester compound represented by the following Chemical Formula (2). In Chemical Formula (2), R denotes a first hydrocarbon group, and R' denotes a second hydrocarbon group containing three or more carbon atoms.

Chemical Formula (2):

Chem. 1

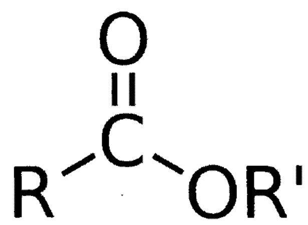

Even when the above ester compound comes into contact with the positive electrode, a reaction (e.g., a reaction with the positive electrode sulfur-containing phase) in which sulfur atoms contained in the positive electrode active material-containing layer are consumed hardly occurs. This is considered to be because the ester compound in which R' in Chemical Formula (2) contains three or more carbon atoms is less likely to be decomposed starting from extraction of an alkyl group as compared with an ester compound (e.g., diethyl carbonate) in which R' in Chemical Formula (2) contains two or less carbon atoms. Therefore, when the nonaqueous electrolyte contains an ester compound represented by Chemical Formula (2) in which R is the first hydrocarbon group and R' is the second hydrocarbon group containing three or more carbon atoms, a reaction in which sulfur atoms contained in the positive electrode active material-containing layer are consumed hardly occurs. Therefore, gas generation can be suppressed.

When the nonaqueous electrolyte contains the above ester compound, for example, a reaction between the nonaqueous electrolyte and the positive electrode sulfur-containing phase can be made less likely to occur. In addition, for example, a propane sulfonic acid ester can be hardly generated. Therefore, when the nonaqueous electrolyte contains the above ester compound, the area B within the range in which the retention time is 13.5 minutes or more and 14.5 minutes or less in the total ion chromatogram of the nonaqueous electrolyte can be kept small. Therefore, the ratio B/A can be set in the range of 0 to 0.000944.

In the total ion chromatogram of the nonaqueous electrolyte, the peak of the ester compound represented by Chemical Formula (2) in which R is the first hydrocarbon group and R' is the second hydrocarbon group containing three or more carbon atoms may appear within the range in which the retention time is 15 minutes or more and 18 minutes or less. That is, in the total ion chromatogram of the nonaqueous electrolyte, the peak of the ester compound may appear in

addition to the peak of the cyclic carbonate within the range in which the retention time is 15 minutes or more and 18 minutes or less. Alternatively, one peak in which the peak of the ester compound and the peak of the cyclic carbonate overlap each other may appear.

Examples of the ester compound represented by Chemical Formula (2) in which R is the first hydrocarbon group and R' is the second hydrocarbon group containing three or more carbon atoms include propyl propionate (PP), ethyl butyrate (EB), and pentyl propionate. The kind of the above ester compound can be one kind or two or more kinds.

The number of carbon atoms contained in the second hydrocarbon group R' may be, for example, in the range of 3 to 5. The number of carbon atoms contained in the first hydrocarbon group R is not particularly limited, and may be, for example, 3 or 4. The first hydrocarbon group and the second hydrocarbon group may be of the same kind or of different kinds.

The reaction between the nonaqueous electrolyte and the positive electrode sulfur-containing phase and the generation of the propane sulfonic acid ester tend to be suppressed as the content of the ester compound represented by Chemical Formula (2) in which R is the first hydrocarbon group and R' is the second hydrocarbon group containing three or more carbon atoms in the nonaqueous electrolyte is increased. The content of the above ester compound can be, for example, greater than or equal to 10% by mass. As the content of the above ester compound decreases, the proportion of the cyclic carbonate in the nonaqueous electrolyte can be increased, so that the electrolyte salt tends to be easily dissociated. The content of the above ester compound can be, for example, less than or equal to 90% by mass.

Hereinafter, an ester compound represented by Chemical Formula (2) in which R is the first hydrocarbon group and R' is the second hydrocarbon group containing three or more carbon atoms may be referred to as an ester compound represented by Chemical Formula (2).

FIGS. 1 and 2 show an example of a secondary battery using a container member made of a laminated film.

As shown in FIGS. 1 and 2, an electrode group 1 is a flat wound electrode group. The wound electrode group 1 is housed in a bag-shaped container member 12 made of a laminated film including a metal layer interposed between two resin films. The flat wound electrode group 1 is formed by spirally winding a stack in which a negative electrode 4, a separator 5, a positive electrode 3, and a separator 5 are stacked in this order from the outside about an axis parallel to the short side direction, and press-molding the stack. As shown in FIG. 2, the negative electrode 4 as the outermost layer has a configuration in which a negative electrode active material-containing layer 4b containing a negative electrode active material is formed on one surface of a negative electrode current collector 4a on the inner surface side of the negative electrode current collector 4a, and another negative electrode 4 has a configuration in which a negative electrode active material-containing layer 4b is formed on both surfaces of a negative electrode current collector 4a. The positive electrode 3 is configured by forming a positive electrode active material-containing layer 3b on both surfaces of a positive electrode current collector 3a.

In the vicinity of the outer peripheral end of the wound electrode group 1, a negative electrode terminal 13 is connected to the negative electrode current collector 4a of the outermost negative electrode 4, and a positive electrode terminal 14 is connected to the positive electrode current collector 3a of the inner positive electrode 3. The negative electrode terminal 13 and the positive electrode terminal 14 extend to the outside from an opening of the bag-shaped container member 12. The opening of the bag-shaped container member 12 is heat-sealed to seal the wound electrode group 1. At the time of the heat sealing, the negative electrode terminal 13 and the positive electrode terminal 14 are sandwiched by the bag-shaped container member 12 at the opening.

FIGS. 3 and 4 show an example of a secondary battery using a metal container.

The electrode group 1 is housed in a rectangular cylindrical metal container 2. The electrode group 1 is formed, for example, by winding the positive electrode 3 and the negative electrode 4 in a flat spiral shape about an axis parallel to the short side direction of the positive electrode 3 and the negative electrode 4 with the separator 5 interposed therebetween. As shown in FIG. 4, a strip-shaped positive electrode lead 6 is electrically connected to each of a plurality of portions of an edge of the positive electrode 3 located on an end surface of the electrode group 1 intersecting the stacking direction of the electrodes. A belt-shaped negative electrode lead 7 is electrically connected to each of a plurality of portions of an edge of the negative electrode 4 located on the end surface. The plurality of positive electrode leads 6 are electrically connected to a positive electrode current-collecting tab 8 in a bundled state. The positive electrode leads 6 and the positive electrode current-collecting tab 8 constitute a positive electrode terminal. The negative electrode leads 7 are connected to a negative electrode current-collecting tab 9 in a bundled state. The negative electrode leads 7 and the negative electrode current-collecting tab 9 constitute a negative electrode terminal. A metal sealing plate 10 is fixed to the metal container 2 by welding or the like at an opening of the metal container 2. Each of the positive electrode current-collecting tab 8 and the negative electrode current-collecting tab 9 is drawn to the outside from extraction holes provided in the sealing plate 10. An inner peripheral surface of each of the extraction holes of the sealing plate 10 is covered with an insulating member 11 in order to avoid a short circuit due to contact with the positive electrode current-collecting tab 8 and the negative electrode current-collecting tab 9.

The secondary battery according to the approach is not limited to the secondary battery having the configuration shown in FIGS. 1 and 2 and the secondary battery having the configuration shown in FIGS. 3 and 4, and may be, for

example, a battery having a configuration shown in FIGS. 5 and 6.

FIG. 5 is a partially cutaway perspective view schematically showing another example of the secondary battery. FIG. 6 is an enlarged cross-sectional view of a part B of the secondary battery shown in FIG. 5.

The secondary battery shown in FIGS. 5 and 6 includes an electrode group 1 shown in FIGS. 5 and 6, a container member 12 shown in FIG. 5, and an electrolyte (not shown). The electrode group 1 and the electrolyte are housed in the container member 12. The electrolyte is retained in the electrode group 1.

The container member 12 is made of the laminated film including two resin layers and a metal layer interposed between the resin layers.

As shown in FIG. 6, the electrode group 1 is a stacked electrode group. The stacked electrode group 1 has a structure in which negative electrodes 4 and positive electrodes 3 are alternately stacked with separators 5 interposed therebetween.

The electrode group 1 includes the plurality of negative electrodes 4. Each of the plurality of negative electrodes 4 includes a negative electrode current collector 4a and a negative electrode active material-containing layer 4b supported on both surfaces of the negative electrode current collector 4a. The electrode group 1 includes the plurality of positive electrodes 3. Each of the plurality of positive electrodes 3 includes a positive electrode current collector 3a and a positive electrode active material-containing layer 3b supported on both surfaces of the positive electrode current collector 3a.

The negative electrode current collector 4a of each of the negative electrodes 4 includes a portion where the negative electrode active material-containing layer 4b is not supported on any surface on one side of the negative electrode current collector 4a. This portion can serve as a negative electrode current-collecting tab 4c. As shown in FIG. 6, the negative electrode current-collecting tabs 4c do not overlap the positive electrodes 3. The plurality of negative electrode current-collecting tabs 4c are electrically connected to the belt-shaped negative electrode terminal 13. A tip of the belt-shaped negative electrode terminal 13 is drawn out of the container member 12.

Although not shown, the positive electrode current collector 3a of each of the positive electrodes 3 includes a portion where the positive electrode active material-containing layer 3b is not supported on any surface on one side of the positive electrode current collector 3a. This portion serves as a positive electrode current-collecting tab. Like the negative electrode current-collecting tabs 4c, the positive electrode current-collecting tabs do not overlap the negative electrodes 4. The positive electrode current-collecting tabs are located on the opposite side of the electrode group 1 with respect to the negative electrode current-collecting tabs 4c. The positive electrode current-collecting tabs are electrically connected to the belt-shaped positive electrode terminal 14. A tip of the belt-shaped positive electrode terminal 14 is located on the side opposite to the negative electrode terminal 13 and is drawn out of the container member 12.

As an example of the secondary battery according to the approach, a method for producing a secondary battery including a wound electrode group will be described with reference to FIG. 7. FIG. 7 is a schematic view showing an outline of a method for producing a secondary battery using a bag-shaped container member made of a laminated film.

First, the positive electrode 3 and the negative electrode 4 are produced.

For the positive electrode, for example, a slurry is prepared by suspending a positive electrode active material, an electro-conductive agent, and a binder in a solvent. The slurry is applied to one or both of surfaces of a current collector. Next, the applied slurry is dried to obtain a stack of the positive electrode active material-containing layer and the current collector. Thereafter, the stack is pressed. In this way, the positive electrode is produced. Alternatively, the positive electrode may be produced by the following method. First, an active material, an electro-conductive agent, and a binder are mixed to obtain a mixture. Then, the mixture is formed into pellets. Subsequently, the positive electrode can be obtained by disposing these pellets on the current collector.

The negative electrode can be produced, for example, by the following method. First, a slurry is prepared by suspending a negative electrode active material, an electro-conductive agent, and a binder in a solvent. The slurry is applied to one or both of surfaces of a current collector. Next, the applied slurry is dried to obtain a stack of the negative electrode active material-containing layer and the current collector. Thereafter, the stack is pressed. In this way, the negative electrode is produced. Alternatively, the negative electrode may be produced by the following method. First, a negative electrode active material, an electro-conductive agent, and a binder are mixed to obtain a mixture. Then, the mixture is formed into pellets. Subsequently, the negative electrode can be obtained by disposing these pellets on the current collector.

The separators 5 are disposed between the positive electrodes 3 and the negative electrodes 4 to produce the electrode group 1. The positive electrode terminal 14 is electrically connected to the positive electrodes 3 of the electrode group 1, and the negative electrode terminal 13 is electrically connected to the negative electrodes 4 of the electrode group 1.

After the electrode group 1 having the positive and negative electrode terminals 13 and 14 is housed in the bag-shaped container member 12 made of the laminated film, the other edge 21b excluding the first edge 21a is sealed by thermal fusion. Next, the nonaqueous electrolyte is injected into the bag-shaped container member 12 from the first edge 21a, and the first edge 21a is sealed by thermal fusion. The thermal fusion may be performed under reduced pressure. Thus, the secondary battery 30 subjected to the first sealing is obtained.

Next, the secondary battery 30 subjected to the first sealing is initially charged and discharged at room temperature (e.g., 25°C), and then subjected to aging at a temperature equal to or higher than room temperature. By undergoing the initial charging and discharging and the aging, a reaction between the sultone compound and the positive electrode active material occurs, and as a result, sulfur atoms are contained in the positive electrode active material-containing layer. Specifically, a decomposition product of the nonaqueous electrolyte containing the sultone compound may be formed on the surface of the positive electrode active material contained in the positive electrode active material-containing layer. As a result, a layered sulfur-containing phase may be formed on the surface of the positive electrode active material. In this way, the positive electrode active material-containing layer 3b containing sulfur atoms can be obtained. At this time, sulfur atoms may also be contained in the negative electrode active material-containing layer. As a result, the negative electrode active material-containing layer 4b containing sulfur atoms can be obtained.

After the aging, the temperature of the secondary battery 30 is returned to room temperature, and then the bag-shaped container member 12 is cut and opened along an unsealed cutting line 22 inside the first edge 21a in the argon atmosphere, and gas in the bag-shaped container member 12 is released to the outside. Note that a portion cut along the cutting line 22 from the bag-shaped container member 12 is indicated by reference numeral 23.

After the bag-shaped container member 12 is cut and opened, a sultone compound or a solution containing a sultone compound may be supplied into the bag-shaped container member 12. The sultone compound contained in the nonaqueous electrolyte injected into the bag-shaped container member 12 before the first sealing is consumed through the initial charging and discharging and the aging, but thereafter, the concentration of the sultone compound in the nonaqueous electrolyte can be adjusted by adding the sultone compound or a solution containing the sultone compound.

Next, an edge 24 along the cutting line 22 is sealed under reduced pressure (e.g., -90 kPa).

By adjusting the production conditions for the production method described above, the mass of sulfur atoms per unit volume of the positive electrode active material-containing layer and the concentration of the sultone compound in the nonaqueous electrolyte can be set within the target ranges. As a result, the secondary battery 31 according to the approach is obtained.

Details of the production conditions will be described below.

It is preferable that the positive electrode and the negative electrode used for the production of the electrode group be dried in advance before the production of the electrode group. As the drying is performed at a higher temperature or for a longer time, moisture remaining in the electrodes can be reduced. From the viewpoint of reducing moisture in the electrodes, the drying is preferably performed under reduced pressure. For example, vacuum drying at 120°C for 24 hours is preferable.

When each of the positive electrode and the negative electrode is produced through a step of applying a slurry to one surface or both surfaces of a current collector and then drying a coating film of the applied slurry, it is preferable to further perform the above drying after the step of drying the coating film.

When the positive electrode and the negative electrode used for producing the electrode group are dried, the amount of moisture brought into the secondary battery can be reduced. When moisture is brought into the secondary battery, water itself may be electrolyzed to cause generation of a gas, and a side reaction in the negative electrode is likely to occur. Therefore, in the battery reaction, lithium ions extracted from the positive electrode are consumed in a side reaction in the negative electrode, and thus lithium ions are less likely to be inserted into the negative electrode. As a result, SOC deviation may occur or the potential of the positive electrode may be shifted to a higher potential. When the potential of the positive electrode becomes too high and deviates from a potential range in which the nonaqueous electrolyte can be stably present, decomposition of the nonaqueous electrolyte easily occurs in the positive electrode, which causes gas generation. In addition, when moisture is brought into the secondary battery, the nonaqueous electrolyte and water may react with each other to generate hydrofluoric acid, so that the electrodes may be degraded.

Therefore, when the positive electrode and the negative electrode used for producing the electrode group are dried, side reactions can be suppressed, so that gas generation in the secondary battery according to the approach can be suppressed, which is preferable.

As described with reference to FIG. 7, when the initial charging and discharging and the aging are performed on the secondary battery 30 subjected to the first sealing, gas is generated in the secondary battery 30 subjected to the first sealing. Examples of the gas generation reaction include a reaction in which water brought into the secondary battery 30 is decomposed.

As described with reference to FIG. 7, the gas generated in the initial charging and discharging and the aging is released to the outside after the aging. Therefore, by allowing the gas generation reaction to proceed during the aging, the residual amount of the substance that causes the gas generation in the secondary battery 31 according to the approach obtained after the aging can be reduced. Therefore, gas generation in the secondary battery 31 according to the approach can be suppressed.

When the aging temperature is lowered or the aging time is shortened, it is possible to suppress the decomposition and consumption of the sultone compound during the aging, so that the amount of the sultone compound remaining in the nonaqueous electrolyte of the secondary battery 31 according to the approach can be increased. When

the aging temperature is increased or the aging time is increased, the reaction between the sultone compound and the positive electrode active material and the gas generation reaction in the aging tend to easily proceed.

In order to leave the sultone compound in the nonaqueous electrolyte contained in the secondary battery 31 according to the approach, for example, the aging can be performed at a low temperature higher than or equal to 30°C and lower than or equal to 60°C for a secondary battery having an SOC higher than or equal to 50% and lower than or equal to 80% in a short time longer than or equal to 3 hours and shorter than or equal to 12 hours. The aging is preferably performed on a secondary battery having an SOC higher than or equal to 50% and lower than or equal to 70%. The aging temperature can be set to, for example, 45°C. The aging time can be set to, for example, 7 hours.

A secondary battery in which the mass M ($g/m^3$) of sulfur atoms per unit volume of the positive electrode active material-containing layer and the concentration E (mol/L) of the sultone compound in the nonaqueous electrolyte satisfy $1 \times 10^{-6} \leq E/M \leq 9 \times 10^{-4}$ can be obtained, for example, by performing the aging as described above. It is more preferable to perform the aging as described above after adjusting the composition of the nonaqueous electrolyte.

The positive electrode, the negative electrode, and the nonaqueous electrolyte will be described below. The separator and the container member that can be included in the secondary battery according to the approach in addition to these members will also be described below.

1) Positive Electrode

The positive electrode can include a positive electrode current collector and a positive electrode active material-containing layer. The positive electrode active material-containing layer may be formed on one surface or both surfaces of the positive electrode current collector. The positive electrode active material-containing layer can contain a positive electrode active material, sulfur atoms, and optionally an electro-conductive agent and a binder. The positive electrode active material-containing layer may contain the positive electrode sulfur-containing phase described above. The sulfur atoms may be contained in the positive electrode sulfur-containing phase. The positive electrode sulfur-containing phase may be present on at least a part of the surface of the positive electrode, or may cover at least a part of a surface of a positive electrode active material particle. The positive electrode sulfur-containing phase may have a film shape or a layered shape.

In the secondary battery according to the approach in which E and M satisfy $1 \times 10^{-6} \leq E/M \leq 9 \times 10^{-4}$, the mass M of sulfur atoms per unit volume of the positive electrode active material-containing layer may be, for example, greater than or equal to 389 $g/m^3$ and less than or equal to 3000 $g/m^3$.

As the positive electrode active material, for example, an oxide or a sulfide can be used. The positive electrode may contain one kind of compound alone or two or more kinds of compounds in combination as the positive electrode active material. Examples of the oxide and the sulfide include compounds capable of inserting and extracting Li or Li ions.

Examples of the compounds include manganese dioxide ($MnO_2$), iron oxides, copper oxides, nickel oxides, lithium manganese composite oxides (e.g., $Li_xMn_2O_4$ or $Li_xMnO_2$; $0 < x \leq 1$), lithium nickel composite oxides (e.g., $Li_xNiO_2$; $0 < x \leq 1$), lithium-cobalt composite oxides (e.g., $Li_xCoO_2$; $0 < x \leq 1$), lithium nickel cobalt composite oxides (e.g., $Li_xNi_{1-y}Co_yO_2$; $0 < x \leq 1$, $0 < y < 1$), lithium manganese cobalt composite oxides (e.g., $Li_xMn_yCo_{1-y}O_2$; $0 < x \leq 1$, $0 < y < 1$), lithium manganese nickel composite oxides having a spinel structure (e.g., $Li_xMn_{2-y}Ni_yO_4$; $0 < x \leq 1$, $0 < y < 2$), lithium phosphorus oxide having an olivine structure (e.g., $Li_xFePO_4$; $0 < x \leq 1$, $Li_xFe_{1-y}Mn_yPO_4$; $0 < x \leq 1$, $0 < y \leq 1$, $Li_xCoPO_4$; $0 < x \leq 1$), iron sulfate ($Fe_2(SO_4)_3$), vanadium oxide (e.g., $V_2O_5$), lithium nickel cobalt-containing oxides ($LiNi_xCo_yM_zO_2$; $x + y + z = 1$, $x \geq 0.8$, M consisting of Mn and Al), and lithium nickel cobalt manganese composite oxides ($Li_xNi_{1-y-z}Co_yMn_zO_2$; $0 < x \leq 1$, $0 < y < 1$, $0 < z < 1$, $y + z < 1$).

Among the above, examples of more preferable compounds as the positive electrode active material include a lithium manganese composite oxide having a spinel structure, a lithium nickel cobalt manganese composite oxide, a lithium phosphorus oxide having an olivine structure, a lithium nickel cobalt containing oxide, a lithium manganese nickel composite oxide having a spinel structure, a lithium nickel cobalt manganese composite oxide, and a lithium cobalt composite oxide. More specific examples of compounds as the positive electrode active material include a lithium manganese composite oxide having a spinel structure (e.g., $Li_xMn_2O_4$; $0 < x \leq 1$, $Li_xMn_{2-y}Ni_yO_4$; $0 < x \leq 1$, $0 < y < 2$), a lithium nickel cobalt manganese composite oxide ($Li_xNi_{1-y-z}Co_yMn_zO_2$; $0 < x \leq 1$, $0 < y < 1$, $0 < z < 1$, $y + z < 1$), a lithium phosphorus oxide having an olivine structure (e.g., $Li_xFePO_4$; $0 < x \leq 1$, $Li_xFe_{1-y}Mn_yPO_4$; $0 < x \leq 1$, $0 < y \leq 1$, $Li_xCoPO_4$; $0 < x \leq 1$), a lithium nickel cobalt-containing oxide ($LiNi_xCo_yM_zO_2$; $x + y + z = 1$, $x \geq 0.8$, M consisting of Mn and Al), a lithium manganese nickel composite oxide having a spinel structure (e.g., $Li_xMn_{2-y}Ni_yO_4$; $0 < x \leq 1$, $0 < y < 2$), a lithium nickel cobalt manganese composite oxide ($Li_xNi_{1-y-z}Co_yMn_zO_2$; $0 < x \leq 1$, $0 < y < 1$, $0 < z < 1$, $y + z < 1$), and a lithium cobalt composite oxide (e.g., $Li_xCoO_2$; $0 < x \leq 1$). When these compounds are used for the positive electrode active material, a battery voltage can be increased. In the lithium nickel cobalt manganese composite oxide represented by $Li_xNi_{1-y-z}Co_yMn_zO_2$, when y and z satisfy $0 < y + z \leq 0.2$, a high energy density can be achieved.

The positive electrode active material may have a particle shape. The primary particle size of the positive electrode active material is preferably greater than or equal to 100 nm and less than or equal to 1 μm. The positive

electrode active material having a primary particle size greater than or equal to 100 nm is easy to handle in industrial production. The positive electrode active material having a primary particle size less than or equal to 1 μm can smoothly diffuse lithium ions in a solid.

The specific surface area of the positive electrode active material is preferably greater than or equal to 0.1 $m^2$/g and less than or equal to 10 $m^2$/g. The positive electrode active material having a specific surface area greater than or equal to 0.1 $m^2$/g can sufficiently secure insertion/extraction sites of Li ions. The positive electrode active material having a specific surface area less than or equal to 10 $m^2$/g is easy to handle in industrial production, and can ensure good charge-and-discharge cycle performance.

The binder is blended to fill gaps of the dispersed positive electrode active material and to bind the positive electrode active material and the positive electrode current collector. Examples of the binder include polytetrafluoro ethylene (PTFE), polyvinylidene fluoride (PVdF), fluororubber, polyacrylic acid compounds, imide compounds, carboxymethyl cellulose (CMC), and salts of CMC. One of them may be used as the binder, or two or more of them may be used in combination as the binder.

The electro-conductive agent is blended in order to improve current collection performance and suppress contact resistance between the positive electrode active material and the positive electrode current collector. Examples of the electro-conductive agent include vapor grown carbon fiber (VGCF), carbon black such as acetylene black, and carbonaceous substances such as graphite. One of them may be used as the electro-conductive agent, or two or more of them may be used in combination as the electro-conductive agent. Further, the electro-conductive agent can be omitted.

When the electro-conductive agent is omitted, it is preferable that in the positive electrode active material-containing layer, the positive electrode active material and the binder be blended in proportions of 80% by mass or higher and 98% by mass or lower and 2% by mass or higher and 20% by mass or lower, respectively, so that the total is 100% by mass.

By setting the mass percentage of the binder to 2% by mass or higher, sufficient electrode strength can be obtained. In addition, the binder can function as an insulator. Therefore, in a case where the mass percentage of the binder is lower than or equal to 20% by mass, the amount of the insulator contained in the electrode is reduced, so that the internal resistance can be reduced.

In a case where the electro-conductive agent is added, the positive electrode active material, the binder, and the electro-conductive agent are preferably blended in proportions of 77% by mass or higher and 95% by mass or lower, 2% by mass or higher and 20% by mass or lower, and 3% by mass or higher and 15% by mass or lower, respectively, so that the total is 100% by mass.

By setting the mass percentage of the electro-conductive agent to 3% by mass or higher, the above-described effect can be exhibited. In addition, by setting the mass percentage of the electro-conductive agent to 15% by mass or lower, the ratio of the electro-conductive agent in contact with the electrolyte can be reduced. In a case where this ratio is low, decomposition of the electrolyte can be reduced under high-temperature storage.

The positive electrode current collector is preferably aluminum foil or aluminum alloy foil containing one or more elements selected from Mg, Ti, Zn, Ni, Cr, Mn, Fe, Cu, and Si.

The thickness of the aluminum foil or the aluminum alloy foil is preferably greater than or equal to 5 um and less than or equal to 20 μm, and more preferably less than or equal to 15 μm. The purity of the aluminum foil is preferably higher than or equal to 99% by mass. The mass percentages of transition metals contained in the aluminum foil or the aluminum alloy foil, such as iron, copper, nickel, and chromium, are preferably lower than or equal to 1% by mass.

Further, the positive electrode current collector may include a portion on which the positive electrode active material-containing layer is not formed on the surface thereof. This portion can serve as a positive electrode current-collecting tab.

2) Negative Electrode

The negative electrode can include a current collector and a negative electrode active material-containing layer. The negative electrode active material-containing layer may be formed on one surface or both surfaces of the current collector. The negative electrode active material-containing layer can contain a negative electrode active material, and optionally an electro-conductive agent and a binder. The negative electrode active material-containing layer preferably contains sulfur atoms. The negative electrode active material-containing layer may contain the negative electrode sulfur-containing phase described above. The sulfur atoms may be contained in the negative electrode sulfur-containing phase. The negative electrode sulfur-containing phase may be present on at least a part of the surface of the negative electrode, or may cover at least a part of a surface of a negative electrode active material particle. The negative electrode sulfur-containing phase may have a film shape or a layered shape.

The negative electrode active material is not particularly limited as long as it allows lithium or lithium ions to be inserted and extracted. The kind of the negative electrode active material to be used may also be one kind or two or more kinds. Examples of the negative electrode active material include titanium-containing oxides, niobium-containing oxides,

and carbon materials.

Examples of the titanium-containing oxides include lithium titanium-containing oxides and titanium oxides. Examples of the niobium-containing oxides include niobium titanium oxides, niobium tungsten-containing oxides, and niobium titanium molybdenum-containing oxides.

Examples of the titanium-containing oxides include lithium titanates having a ramsdellite structure (e.g., $Li_{2+y}Ti_3O_7$, $0 \leq y \leq 3$), lithium titanates having a spinel structure (e.g., $Li_{4+x}Ti_5O_{12}$, $0 \leq x \leq 3$), monoclinic titanium dioxide (TiOz), anatase titanium dioxide, rutile titanium dioxide, hollandite titanium composite oxides, and orthorhombic titanium composite oxides. A lithium-ion insertion-extraction electric potential of the titanium-containing oxide is higher than or equal to 0.4 V (vs. $Li/Li^+$).

Examples of the above orthorhombic titanium-containing composite oxides include a compound represented by $Li_{2+a}M^{I}_{2-b}Ti_{6-c}M^{II}_{d}O_{14+\sigma}$. Here, $M^{I}$ is at least one selected from the group consisting of Sr, Ba, Ca, Mg, Na, Cs, Rb, and K. $M^{II}$ is at least one selected from the group consisting of Zr, Sn, V, Nb, Ta, Mo, W, Y, Fe, Co, Cr, Mn, Ni, and Al. The subscripts in the composition formula satisfy $0 \leq a \leq 6$, $0 < b < 2$, $0 \leq c < 6$, $0 \leq d < 6$, and $-0.5 \leq \sigma \leq 0.5$. Specific examples of the orthorhombic titanium-containing composite oxides include $Li_{2+a}Na_2Ti_6O_{14}$ ($0 \leq a \leq 6$) .

Examples of the above niobium-containing oxides include niobium oxides, niobium titanium oxides, niobium tungsten-containing oxides, and niobium titanium molybdenum-containing oxides.

Examples of the niobium titanium oxides include monoclinic niobium titanium oxides. Examples of the monoclinic niobium titanium oxides include a compound represented by $Li_xTi_{1-y}Ml_yNb_{2-z}M2_zO_{7+\delta}$. M1 is at least one selected from the group consisting of Zr, Si, and Sn. M2 is at least one selected from the group consisting of V, Ta, and Bi. The subscripts in the composition formula satisfy $0 \leq x \leq 5$, $0 \leq y < 1$, $0 \leq z < 2$, and $-0.3 \leq \delta \leq 0.3$. Specific examples of the monoclinic niobium titanium oxides include $Li_xNb_2TiO_7$ ($0 \leq x \leq 5$).

Other examples of the monoclinic niobium titanium oxides include a compound represented by $Li_xTi_{1-y}M3_{y+z}Nb_{2-z}O_{7-\delta}$. M3 is at least one selected from Mg, Fe, Ni, Co, W, Ta, and Mo. The subscripts in the composition formula satisfy $0 \leq x \leq 5$, $0 \leq y < 1$, $0 \leq z < 2$, and $-0.3 \leq \delta \leq 0.3$.

Examples of the carbon materials include graphite and hard carbon. When a carbon material is used for the negative electrode, copper foil is used for the negative electrode current collector.

Among the negative electrode active materials, the monoclinic niobium titanium oxide has a lithium-ion insertion-extraction electric potential of about 1.0 V (vs. $Li/Li^+$), and thus can appropriately cause a decomposition reaction of the sultone compound in the negative electrode. A lithium-ion insertion-extraction electric potential of a lithium titanate is around 1.4 V (vs. $Li/Li^+$), and a lithium-ion insertion-extraction electric potential of a carbon material is around 0 V (vs. $Li/Li^+$).

The negative electrode active material may have a particle shape.

The electro-conductive agent can be blended to improve current collection performance and to suppress contact resistance between the active material and the current collector. Examples of the electro-conductive agent include vapor grown carbon fiber (VGCF), a carbon nanotube, carbon black such as acetylene black, and carbonaceous substances such as graphite. One of them may be used as the electro-conductive agent, or two or more of them may be used in combination as the electro-conductive agent. Alternatively, instead of using the electro-conductive agent, carbon coating or electron conductive inorganic material coating may be applied to the surface of the active material particles.

The binder is blended to fill gaps of the dispersed active material and to bind the active material and the current collector. Examples of the binder include polytetrafluoro ethylene (PTFE), polyvinylidene fluoride (PVdF), fluororubber, styrene-butadiene rubber, polyacrylic acid compounds, imide compounds, carboxymethyl cellulose (CMC), and salts of CMC. One of them may be used as the binder, or two or more of them may be used in combination as the binder.

As for the blending ratio of the negative electrode active material and the binder in the negative electrode active material-containing layer, as an example, it is preferable that the negative electrode active material and the binder be blended in proportions of 68% by mass or higher and 98% by mass or lower, and 2% by mass or higher and 32% by mass or lower, respectively, so that the total is 100% by mass. In a case where the mass percentage of the binder is higher than or equal to 2% by mass, the binding property between the negative electrode active material-containing layer and the current collector is sufficient, and excellent cycle performance can be expected. On the other hand, it is preferable that the mass percentage of the binder be lower than or equal to 32% by mass in order to increase the capacity.

When the electro-conductive agent is blended in the negative electrode active material-containing layer, as for the blending ratio of the negative electrode active material, the electro-conductive agent, and the binder in the negative electrode active material-containing layer, as an example, it is preferable that the negative electrode active material, the conductive agent, and the binder be blended in proportions of 68% by mass or higher and 96% by mass or lower, 2% by mass or higher and 30% by mass or lower, and 2% by mass or higher and 30% by mass or lower, respectively, so that the total is 100% by mass. In a case where the mass percentage of the electro-conductive agent is higher than or equal to 2% by mass, the current collection performance of the negative electrode active material-containing layer can be improved. In a case where the mass percentage of the binder is higher than or equal to 2% by mass, the binding property between the negative electrode active material-containing layer and the current collector is sufficient, and excellent cycle performance

can be expected. On the other hand, it is preferable that the mass percentage of each of the electro-conductive agent and the binder be lower than or equal to 30% by mass in order to increase the capacity.

As the material of the current collector, a material that is electrochemically stable at a potential at which lithium (Li) is inserted into and extracted from the negative electrode active material is used. An example of the current collector when a negative electrode active material having a lithium-ion insertion-extraction electric potential of 0.4 V (vs. Li/Li+) or higher is used is copper, nickel, stainless steel, or aluminum, or an aluminum alloy containing one or more elements selected from Mg, Ti, Zn, Mn, Fe, Cu, and Si. The thickness of the current collector is preferably greater than or equal to 5 μm and less than or equal to 20 μm. The current collector having such a thickness can balance the strength and weight reduction of the electrode.

Furthermore, the current collector may include a portion on which the negative electrode active material-containing layer is not formed on the surface thereof. This portion can serve as a negative electrode current-collecting tab.

3) Nonaqueous Electrolyte

As the nonaqueous electrolyte, for example, a liquid nonaqueous electrolyte or a gel nonaqueous electrolyte can be used. The liquid nonaqueous electrolyte contains an electrolyte salt, a sultone compound, and a cyclic carbonate. The liquid nonaqueous electrolyte may further contain an ester compound represented by Chemical Formula (2) in which R is the first hydrocarbon group and R' is the second hydrocarbon group containing three or more carbon atoms.

Chemical Formula (2):

Chem. 2

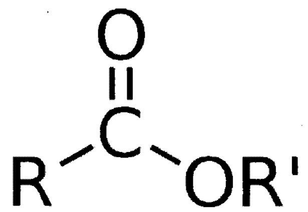

The liquid nonaqueous electrolyte contains a solvent capable of dissolving an electrolyte salt. The solvent may be an organic solvent.

Each of the sultone compound, the cyclic carbonate, and the ester compound represented by Chemical Formula (2) may have a function as a solvent. The sultone compound may have a function as an electrolyte salt, and may also serve as an electrolyte salt or a solvent. The liquid nonaqueous electrolyte may further contain another solvent of the sultone compound, the cyclic carbonate, and the ester compound represented by Chemical Formula (2).

In the secondary battery according to the approach in which E and M satisfy $1 \times 10^{-6} \leq E/M \leq 9 \times 10^{-4}$, the concentration E of the sultone compound in the nonaqueous electrolyte may be, for example, higher than or equal to 0.001 mol/L and lower than or equal to 0.082 mol/L.

In the composition of the nonaqueous electrolyte contained in the secondary battery according to the approach, the concentration of the sultone compound may be changed from the composition (initial composition) of the nonaqueous electrolyte before the production of the secondary battery. This is because, for example, the sultone compound may be consumed during initial charging and discharging, aging, and the like after assembly of the secondary battery in which the nonaqueous electrolyte has been injected and the first sealing has been performed.

In the secondary battery according to the approach, in order to adjust the concentration E of the sultone compound in the nonaqueous electrolyte to satisfy $1 \times 10^{-6} \leq E/M \leq 9 \times 10^{-4}$, for example, the concentration (initial concentration) of the sultone compound in the nonaqueous electrolyte before the production of the secondary battery can be in the range of 1.0% by mass to 5.0% by mass.

As the initial concentration of the sultone compound is higher, the sultone compound can more easily remain in the nonaqueous electrolyte even in the secondary battery according to the approach. As the initial concentration of the sultone compound is lower, a decomposition product generated by the reaction of the sultone compound with the electrode active material can be reduced, so that an increase in resistance of the electrode can be suppressed.

The concentration of the sultone compound in the nonaqueous electrolyte in the secondary battery according to the approach may be adjusted within the above-described range by adding the sultone compound or a solution containing the sultone compound to the nonaqueous electrolyte after the initial charging and discharging and the aging.

Examples of the electrolyte salt include lithium salts such as lithium perchlorate ($LiClO_4$), lithium hexafluorophosphate ($LiPF_6$), lithium tetrafluoroborate ($LiBF_4$), lithium arsenic hexafluoride ($LiAsF_6$), lithium trifluoromethanesulfonate ($LiCF_3SO_3$), lithium bis(trifluoromethanesulfonyl)imide (LiTFSI, $LiN(CF_3SO_2)_2$), and lithium bis(fluorosulfonyl)imide

(LiFSI, $LiN(FSO_2)_2$), and mixtures thereof. The electrolyte salt is preferably hardly oxidized even at a high potential, and is most preferably $LiPF_6$. The concentration of the electrolyte salt in the nonaqueous electrolyte is preferably higher than or equal to 0.5 mol/L and lower than or equal to 2.5 mol/L.

The cyclic carbonate has a high dielectric constant. Therefore, the electrolyte salt can be easily dissociated in the nonaqueous electrolyte, which is preferable.

Examples of the cyclic carbonate include propylene carbonate (PC), ethylene carbonate (EC), and vinylene carbonate (VC). The kind of the cyclic carbonate can be one kind or two or more kinds. These cyclic carbonates have three or more and five or less carbon atoms. The cyclic carbonate having three or more and five or less carbon atoms is detected within the retention time of 15 minutes or longer and 18 minutes or shorter in the total ion chromatogram obtained by the gas chromatography mass spectrometry. That is, the area within the range in which the retention time is 15 minutes or longer and 18 minutes or shorter in the total ion chromatogram obtained by the gas chromatography mass spectrometry of the nonaqueous electrolyte may be an index of the content of the cyclic carbonate having three or more and five or less carbon atoms in the nonaqueous electrolyte.

Examples of other organic solvents of the sultone compound, the cyclic carbonate, and the ester compound represented by Chemical Formula (2) include chain carbonates such as diethyl carbonate (DEC), dimethyl carbonate (DMC), and methyl ethyl carbonate (MEC), cyclic ethers such as tetrahydrofuran (THF), 2-methyl tetrahydrofuran (2MeTHF), and dioxolane (DOX), chain ethers such as dimethoxy ethane (DME) and diethoxy ethane (DEE), γ-butyrolactone (GBL), acetonitrile (AN), ethyl propionate (EP), and sulfolane (SL). The nonaqueous electrolyte may contain one or more of these organic solvents.

The gel nonaqueous electrolyte is prepared by combining a liquid nonaqueous electrolyte and a polymer material. Examples of the polymer material include polyvinylidene fluoride (PVdF), polyacrylonitrile (PAN), polyethylene oxide (PEO), or mixtures thereof.

Alternatively, the nonaqueous electrolyte may contain a room temperature molten salt (ionic melt) containing lithium ions, a polymer solid electrolyte, an inorganic solid electrolyte, and the like in addition to the liquid nonaqueous electrolyte and/or the gel nonaqueous electrolyte.

4) Separator

The separator may be, for example, a porous film containing polyethylene (PE), polypropylene (PP), cellulose, or polyvinylidene fluoride (PVdF), or synthetic resin nonwoven fabric. From the viewpoint of safety, it is preferable to use a porous film formed from polyethylene or polypropylene. This is because these porous films can melt at a specified temperature and block the current.

As the separator, an electrolyte layer containing an inorganic solid electrolyte may be used. The inorganic solid electrolyte may be a lithium ion conductive inorganic solid electrolyte. Examples of the lithium ion conductive inorganic solid electrolyte include a lithium ion conductive oxide-based solid electrolyte and a lithium ion conductive sulfide-based solid electrolyte. Examples of the lithium ion conductive oxide-based solid electrolyte include a lithium phosphate solid electrolyte having a NASICON type structure, amorphous LIPON ($Li_{2.9}PO_{3.3}N_{0.46}$), and LLZ ($Li_7La_3Zr_2O_{12}$) having a garnet type structure.

5) Container Member

As the container member, for example, a container made of a laminated film or a metal container can be used.

The thickness of the laminated film is, for example, less than or equal to 0.5 mm, preferably less than or equal to 0.2 mm.

As the laminated film, a multilayer film including a plurality of resin layers and a metal layer interposed between the resin layers is used. The resin layers contain, for example, polymer materials such as polypropylene (PP), polyethylene (PE), nylon, and polyethylene terephthalate (PET). The metal layer is preferably made of aluminum foil or aluminum alloy foil for weight reduction. The laminated film can be formed into the shape of the container member by performing sealing by thermal fusion.

The thickness of the wall of the metal container is, for example, less than or equal to 1 mm, more preferably less than or equal to 0.5 mm, and still more preferably less than or equal to 0.2 mm.

The metal container is made of, for example, aluminum or an aluminum alloy. The aluminum alloy preferably contains elements such as magnesium, zinc, and silicon. In a case where the aluminum alloy contains transition metals such as iron, copper, nickel, and chromium, the contents of the transition metals of the aluminum alloy are preferably less than or equal to 100 ppm by mass.

The shape of the container member is not particularly limited. The shape of the container member may be, for example, a flat shape (thin shape), a square shape, a cylindrical shape, a coin shape, a button shape, or the like. The container member can be appropriately selected according to the size of the battery and the application of the battery.

<Measurement Method>

(Gas Chromatography Mass Spectrometry)

A method for obtaining a total ion chromatogram of the nonaqueous electrolyte, a method for calculating an area within a specific retention time in the total ion chromatogram, and a method for measuring a concentration (mol/L) of the sultone compound in the nonaqueous electrolyte by gas chromatography mass spectrometry (GC-MS) will be described below.

(Preparation of GC-MS Measurement Sample)

In a glove box, the container member of the secondary battery is opened, and the nonaqueous electrolyte is collected. For example, when the container member is a bag-shaped container member made of a laminated film, an edge is cut off, and the nonaqueous electrolyte is collected from an opening portion. The nonaqueous electrolyte is diluted 20 times with acetonitrile and used as a measurement sample.

(Obtaining of Total Ion Chromatogram)

The measurement sample is subjected to gas chromatography mass spectrometry under apparatus conditions shown in Table 1 below.

Table 1

| Apparatus | Item | Condition |
|---|---|---|
| GC | Injection amount | 1uL |
| | Column | Ultra Alloy CW 40m 0.25mm 0.25um |
| | Temperature | 40°C (retained for 2 minutes), increase in temperature by 10°C/min, 240°C (10 min) |
| | Split ratio | 1:50 |
| | He flow rate | 1.0 mL/min |
| MS | Mass range | 10 . 600 m/z |

Time elapsed from injection of the measurement sample into a gas chromatography mass spectrometer is taken as the retention time. A total ion chromatogram is obtained by plotting the detection intensity on the vertical axis and the retention time on the horizontal axis.

(Method for Calculating Area within Specific Retention Time)

First, a baseline is drawn on a background in the obtained total ion chromatogram. A region below the baseline is subtracted from the total ion chromatogram. A chart obtained by the above subtraction processing is integrated over a predetermined retention time range as an integration range. The integral value thus obtained is defined as an area within the predetermined retention time range of the total ion chromatogram. For example, when the area A is calculated, an integral value obtained by performing integration over the range of 15 minutes or longer and 18 minutes or shorter as an integration range in the chart obtained by the subtraction processing is set as the area A within the range in which the retention time is 15 minutes or more and 18 minutes or less.

(Calculation of Concentration of Sultone Compound in Nonaqueous Electrolyte)

The concentration (mol/L) of the sultone compound in the nonaqueous electrolyte is measured as follows.

First, a standard sample is diluted with acetonitrile HPLC (manufactured by Merck Corporation) to prepare a standard sample solution having a known concentration. When 1,3-propane sultone is detected in the measurement of the concentration of the sultone compound, 1,3-propane sultone (manufactured by FUJIFILM Wako Pure Chemical Corporation) can be used as a standard sample. The standard sample solution is subjected to gas chromatography mass spectrometry to create a calibration curve. Next, gas chromatography mass spectrometry is performed on the measurement sample, and the obtained data is plotted on the calibration curve, whereby the concentration of the sultone compound in the nonaqueous electrolyte can be identified.

(ICP Emission Spectrometry)

The type of the ester compound contained in the nonaqueous electrolyte, the concentration (% by mass) of the ester compound in the nonaqueous electrolyte, and the mass ($g/m^3$) of sulfur atoms per unit volume of the positive electrode active material-containing layer are determined by an inductively coupled plasma (ICP) emission spectrometry.

(Preparation of Sample for ICP Emission Spectrometry)

The container member of the secondary battery in a state of charge (SOC) of 50% is opened, and the electrode group is taken out. A jig (such as a tape) bundling the electrode group is removed, and when the outermost layer is a separator, the separator is turned over, and an electrode (for example, a negative electrode) in the first layer is taken out. Furthermore, a separator is turned over, and the electrode (for example, the positive electrode) in the first layer is taken out. The operation of turning over a separator and taking out an electrode is repeated, and all the positive electrodes and the negative electrodes constituting the electrode group are taken out. The taken-out electrodes and separators are put in a centrifugal separator to extract the nonaqueous electrolyte and to separate the electrodes from the separators.

(ICP Emission Spectrometry of Nonaqueous Electrolyte)

The nonaqueous electrolyte separated by the above centrifugal separator is analyzed by ICP to obtain the type of the ester compound contained in the nonaqueous electrolyte and the concentration (% by mass) of the ester compound in the nonaqueous electrolyte.

(ICP Emission Spectrometry of Electrodes)

The electrodes separated by the above centrifugal separator are washed with methylethyl carbonate (MEC) and vacuum-dried. An electrode to be measured (for example, a positive electrode) is punched into a certain area ($2 \times 2cm^2$). The thickness of the active material-containing layer of the punched electrode is measured with a film thickness meter, and is multiplied by the above area ($2 \times 2cm^2$) to obtain the volume of the active material-containing layer in the punched electrode. A certain amount of pure water (10cc) is added to the punched electrode, and ultrasonic irradiation is performed for 30 minutes or more. The extract is analyzed by ICP to measure the mass of sulfur atoms in the extract, whereby the mass of sulfur atoms per unit volume of the active material-containing layer is obtained.

According to the first approach, a secondary battery including a positive electrode, a negative electrode, and a nonaqueous electrolyte is provided. The positive electrode includes a positive electrode active material-containing layer containing sulfur atoms. The nonaqueous electrolyte contains a sultone compound and a cyclic carbonate. In gas chromatography mass spectrometry of the nonaqueous electrolyte, in a total ion chromatogram in which a detection intensity is plotted on a vertical axis and a retention time is plotted on a horizontal axis, a ratio B/A of an area B within a range in which the retention time is 13.5 minutes or more and 14.5 minutes or less to an area A within a range in which the retention time is 15 minutes or more and 18 minutes or less is in a range of 0 to 0.000944. The following Expression (1) is satisfied.

$$\text{Expression (1)}: 1 \times 10^{-6} \leq E/M \leq 9 \times 10^{-4}$$

In Expression (1), M denotes a mass ($g/m^3$) of sulfur atoms per unit volume of the positive electrode active material-containing layer. E denotes a concentration (mol/L) of the sultone compound in the nonaqueous electrolyte. Therefore, it is possible to obtain a secondary battery having high life performance at a high temperature.

(Second Approach)

A battery pack according to a second approach may include one or a plurality of secondary batteries (unit cells) according to the approach. The plurality of secondary batteries may be electrically connected in series, in parallel, or in combination of series and parallel to form a battery module. The battery pack according to the approach may include a plurality of battery modules.

The battery pack according to the approach may further include a protective circuit. The protective circuit has a function of controlling charging and discharging of the secondary battery. Alternatively, a circuit included in an apparatus (e.g., an electronic device, an automobile, or the like) using the battery pack as a power source can also be used as the protective circuit of the battery pack.

The battery pack according to the approach may further include an external power distribution terminal. The

external power distribution terminal is for outputting a current from the secondary battery to the outside and for inputting a current to the secondary battery. In other words, when the battery pack is used as a power source, a current is supplied to the outside through the external power distribution terminal. To charge the battery pack, a charging current (including regenerative energy of power of a vehicle such as an automobile) is supplied to the battery pack through the external power distribution terminal. FIGS. 8 and 9 show an example of a battery pack 50. The battery pack 50 includes a plurality of flat-type batteries having a structure shown in FIG. 8. FIG. 8 is an exploded perspective view of the battery pack 50, and FIG. 9 is a block diagram showing an electric circuit of the battery pack 50 shown in FIG. 8.

A plurality of unit cells 51 are stacked such that the negative electrode terminal 13 and the positive electrode terminal 14 extending to the outside are aligned in the same direction, and are fastened with an adhesive tape 52 to constitute a battery module 53. These unit cells 51 are electrically connected in series as shown in FIG. 9.

A printed wiring board 54 is disposed facing side surfaces of the unit cells 51 from which the negative electrode terminal 13 and the positive electrode terminal 14 extend. On the printed wiring board 54, as shown in FIG. 9, a thermistor 55, a protective circuit 56, and an external power distribution terminal 57 for power supply to an external device as the external power distribution terminal are mounted. An insulating plate (not shown) is attached to the surface of the printed wiring board 54 facing the battery module 53 in order to avoid unnecessary connection with the wiring of the battery module 53.

A positive electrode side lead 58 is connected to the positive electrode terminal 14 located at the lowermost layer of the battery module 53, and a tip of the positive electrode side lead 58 is inserted into and electrically connected to a positive electrode side connector 59 of the printed wiring board 54. A negative electrode side lead 60 is connected to the negative electrode terminal 13 located at the uppermost layer of the battery module 53, and a tip of the negative electrode side lead 60 is inserted into and electrically connected to a negative electrode side connector 61 of the printed wiring board 54. These connectors 59 and 61 are connected to a protective circuit 56 through wiring 62 and 63 formed on the printed wiring board 54.

The thermistor 55 detects a temperature of the unit cells 51, and a detection signal of the thermistor 55 is transmitted to the protective circuit 56. The protective circuit 56 can cut off positive side wiring 64a and negative side wiring 64b between the protective circuit 56 and the power distribution terminal 57 for power supply to an external device as the external power distribution terminal under a predetermined condition. The predetermined condition is, for example, when the temperature detected by the thermistor 55 becomes equal to or higher than a predetermined temperature. The predetermined condition is when overcharge, overdischarge, overcurrent, or the like of the unit cells 51 is detected. The detection of the overcharge or the like is performed for each unit cell 51 or the unit cells 51 as a whole. In the detection performed on each of the unit cells 51, the battery voltage may be detected, or the positive electrode potential or the negative electrode potential may be detected. In the latter case, a lithium electrode used as a reference electrode is inserted into each of the unit cells 51. In the case of FIGS. 8 and 9, wiring 65 for voltage detection is connected to each of the unit cells 51, and a detection signal is transmitted to the protective circuit 56 through the wiring 65.

Protective sheets 66 made of rubber or resin are disposed on three side surfaces of the battery module 53 excluding the side surface from which the positive electrode terminal 14 and the negative electrode terminal 13 protrude.

The battery module 53 is housed in a housing container 67 together with the protective sheets 66 and the printed wiring board 54. That is, the protective sheets 66 are disposed on both inner side surfaces of the housing container 67 extending in the long side direction of the housing container 67 and an inner side surface of the housing container 67 extending in the short side direction of the housing container 67, and the printed wiring board 54 is disposed on an inner side surface of the housing container 67 on the opposite side to the inner side surface of the housing container 67 extending in the short side direction. The battery module 53 is located in a space surrounded by the protective sheets 66 and the printed wiring board 54. A lid 68 is attached to the upper surface of the housing container 67.

To fix the battery module 53, a heat-shrinkable tape may be used instead of the adhesive tape 52. In this case, protective sheets are disposed on both side surfaces of the battery module, the heat-shrinkable tape is wound around the battery module, and then the heat-shrinkable tape is heat-shrunk to bind the battery module.

In FIGS. 8 and 9, the unit cells 51 are connected in series, but may be connected in parallel in order to increase the battery capacity. Alternatively, the unit cells 51 may be connected in combination of series and parallel. The assembled battery packs may be further connected in series or in parallel.

Although the battery pack shown in FIGS. 8 and 9 includes one battery module, the battery pack according to the approach may include a plurality of battery modules. The plurality of battery modules are electrically connected by series connection, parallel connection, or a combination of series connection and parallel connection.

In addition, the mode of the battery pack is appropriately changed depending on the application. The battery pack according to the present approach is suitably used for applications requiring excellent cycle performance when a large current is taken out. Specifically, the battery pack is used as a power source of a digital camera, or as a battery for a vehicle such as a two-wheel to four-wheel hybrid electric automobile, a two-wheel to four-wheel electric automobile, an assist bicycle, or a railway vehicle (e.g., a train), or as a stationary battery, for example. In particular, the battery pack is suitably used as an on-vehicle battery mounted on a vehicle.

The battery pack according to the second approach described above includes the secondary battery according to the approach. Therefore, the life performance at a high temperature can be improved.

(Third Approach)

A vehicle according to a third approach includes one or more secondary batteries according to the approach, or includes the battery pack according to the approach.
In a vehicle such as an automobile on which a battery pack according to the third approach is mounted, the battery pack preferably recovers regenerative energy of power of the vehicle, for example. In addition, the vehicle may include a mechanism that converts kinetic energy of the vehicle into regenerative energy.
FIG. 10 shows an example of an automobile including a battery pack as an example according to the approach.
In an automobile 71 shown in FIG. 10, a battery pack 72 according to an example of the approach is mounted in an engine room on the front side of a vehicle body. The mounting position of the battery pack in the automobile is not limited to the engine room. For example, the battery pack can be mounted on the rear side on the vehicle body in the automobile or under a seat in the automobile.
FIG. 11 is a diagram schematically showing a configuration of an example of the vehicle according to the approach. A vehicle 300 shown in FIG. 11 is an electric automobile.
The vehicle 300 shown in FIG. 11 includes a vehicle power source 301, a vehicle electric control unit (ECU) 380 which is a host control unit of the vehicle power source 301, an external terminal 370, an inverter 340, and a drive motor 345.
In the vehicle 300, the vehicle power source 301 is mounted in, for example, an engine room, on the rear side on a vehicle body in the automobile, or under a seat in the automobile. However, FIG. 11 schematically illustrates a location where the secondary battery is mounted on the vehicle 300.
The vehicle power source 301 includes a plurality of (for example, three) battery packs 312a, 312b, and 312c, a battery management unit (BMU) 311, and a communication bus 310.
The three battery packs 312a, 312b, and 312c are electrically connected in series. The battery pack 312a includes a battery module 314a and a voltage temperature monitor (VTM) 313a. The battery pack 312b includes a battery module 314b and a voltage temperature monitor 313b. The battery pack 312c includes a battery module 314c and a voltage temperature monitor 313c. Each of the battery packs 312a, 312b, and 312c can be independently removed, and can be replaced with another battery pack.
Each of the battery modules 314a to 314c includes a plurality of secondary batteries connected in series. Each of the secondary batteries is the secondary battery according to the approach. Each of the battery modules 314a to 314c is charged and discharged through a positive electrode terminal 316 and a negative electrode terminal 317.
In order to collect information regarding maintenance of the vehicle power source 301, the battery management unit 311 collects information such as voltages and temperatures of the secondary batteries of the battery modules 314a to 314c included in the vehicle power source 301 by communicating with the voltage temperature monitors 313a to 313c.
The communication bus 310 is connected between the battery management unit 311 and the voltage temperature monitors 313a to 313c. The communication bus 310 is configured to share a set of communication lines among a plurality of nodes (the battery management unit and one or more voltage temperature monitors). The communication bus 310 is configured based on, for example, a control area network (CAN) standard.
The voltage temperature monitors 313a to 313c measure the voltages and temperatures of the individual secondary batteries constituting the battery modules 314a to 314c based on a command by communication from the battery management unit 311. However, the temperature can be measured at only several places per battery module, and the temperatures of all the secondary batteries need not be measured.
The vehicle power source 301 can also include an electromagnetic contactor (for example, a switch unit 333 shown in FIG. 11) for turning on and off connection between the positive electrode terminal and the negative electrode terminal. The switch unit 333 includes a precharge switch (not shown) that is turned on to charge the battery modules 314a to 314c, and a main switch (not shown) that is turned on to supply a battery output to a load. Each of the precharge switch and the main switch includes a relay circuit (not shown) that is turned on and off by a signal supplied to a coil disposed near a switch element.
The inverter 340 converts an input direct-current voltage into a three-phase alternating current (AC) high voltage for driving the motor. The output voltage of the inverter 340 is controlled based on a control signal from the battery management unit 311 or the vehicle ECU 380 for controlling the entire operation of the vehicle. Three-phase output terminals of the inverter 340 are connected to three-phase input terminals of the drive motor 345.
The drive motor 345 rotates by power supplied from the inverter 340, and transmits the rotation to an axle and drive wheels W via, for example, a differential gear unit.
Although not shown, the vehicle 300 includes a regenerative brake mechanism that rotates the drive motor 345 to convert kinetic energy into regenerative energy as electric energy when the vehicle 300 is braked. The regenerative

energy recovered by the regenerative brake mechanism is input to the inverter 340 and converted into a direct current. The direct current is input to the vehicle power source 301.

One terminal of a connection line L1 is connected to the negative electrode terminal 317 of the vehicle power source 301 via a current detection unit (not shown) in the battery management unit 311. The other terminal of the connection line L1 is connected to a negative electrode input terminal of the inverter 340.

One terminal of a connection line L2 is connected to the positive electrode terminal 316 of the vehicle power source 301 via the switch unit 333. The other terminal of the connection line L2 is connected to a positive electrode input terminal of the inverter 340.

The external terminal 370 is connected to the battery management unit 311. The external terminal 370 can be connected to, for example, an external power source.

The vehicle ECU 380 cooperatively controls the battery management unit 311 with other apparatuses in response to an operation input from a driver or the like to manage the entire vehicle. Between the battery management unit 311 and the vehicle ECU380, data regarding maintenance of the vehicle power source 301 such as the remaining capacity of the vehicle power source 301 is transferred via a communication line.

The vehicle according to the approach includes a battery pack including the secondary battery according to the approach, and the battery pack (e.g., the battery packs 312a, 312b, and 312c) has high life performance at a high temperature. Therefore, the vehicle that is highly reliable can be obtained. Furthermore, since each battery pack is inexpensive and has high safety, the cost of the vehicle can be suppressed and the safety can be improved.

## Examples

A secondary battery was produced by the following procedure.

(Example 1)

<Production of Positive Electrode>

As a positive electrode active material, a lithium nickel cobalt manganese composite oxide ($LiNi_{0.8}Co_{0.1}Mn_{0.1}O_2$) powder was prepared. Acetylene black was prepared as an electro-conductive agent. Polyvinylidene fluoride (PVdF) was prepared as a binder. Next, the positive electrode active material, the electro-conductive agent, and the binder were added to and mixed with N-methylpyrrolidone (NMP) as a solvent in proportions of 82% by mass, 9% by mass, and 9% by mass, respectively, whereby a positive electrode slurry is prepared. The positive electrode slurry was applied to both surfaces of a current collector made of aluminum foil having a thickness of 15 pm. Subsequently, a coating film of the applied slurry was dried in a thermostatic bath at 120°C to form a positive electrode active material-containing layer, and the positive electrode active material-containing layer was pressed to obtain a positive electrode.

<Production of Negative Electrode>

As a negative electrode active material, a niobium titanium oxide ($Nb_2TiO_7$) powder was prepared. The average secondary particle size of the niobium titanium oxide was 7.5 um. The niobium-titanium oxide had a specific surface area of 4.0m$^2$/g. In addition, acetylene black was prepared as an electro-conductive agent, and polyvinylidene fluoride (PVdF) was prepared as a binder. Next, the negative electrode active material, the electro-conductive agent, and the binder were added to and mixed with N-methylpyrrolidone (NMP) as a solvent in proportions of 82% by mass, 9% by mass, and 9% by mass, respectively, whereby a negative electrode slurry is prepared. The negative electrode slurry was applied to both surfaces of a current collector made of aluminum foil having a thickness of 15 μm. Subsequently, a coating film of the applied slurry was dried in a thermostatic bath at 120°C to form a negative electrode active material-containing layer, and the negative electrode active material-containing layer was pressed to obtain a negative electrode.

<Production of Electrode Group>

Two polyethylene nonwoven fabrics having a thickness of 25 pm were prepared as separators. Next, the positive electrode, the separator, the negative electrode, and the separator were stacked in this order to obtain a stack. Next, the stack was spirally wound. This stack was hot-pressed at 80°C to produce a flat electrode group. A positive electrode terminal was electrically connected to the positive electrode of the electrode group. A negative electrode terminal was electrically connected to the negative electrode of the electrode group.

<Housing of Electrode Group>

A container made of a laminated film having a three-layer structure of a nylon layer, an aluminum layer, and a polyethylene layer and having a thickness of 0.1 mm was prepared. The electrode group produced as described above was housed in this container. Then, the inside of the container was dried in a vacuum at 80°C for 16 hours with a part of a peripheral edge of the container opened.

<Preparation of Liquid Nonaqueous Electrolyte>

A mixed solvent (volume ratio 1:2) of propylene carbonate (PC) as a cyclic carbonate and propyl propionate (PP) as an ester compound represented by Chemical Formula (2) was prepared as a solvent. $LiPF_6$ as an electrolyte salt was dissolved in a solvent at a concentration of 1 mol/L. 1,3-propanesultone (PS) as a sultone compound was added to the solvent so as to have a concentration of 1.0% by mass in the nonaqueous electrolyte, and was dissolved in the solvent. Thus, a liquid nonaqueous electrolyte (nonaqueous electrolytic solution) was obtained in which the concentrations of propylene carbonate (PC), propyl propionate (PP), $LiPF_6$, and 1,3-propane sultone in the liquid nonaqueous electrolyte were 29% by mass, 60% by mass, 10% by mass, and 1.0% by mass, respectively. The liquid nonaqueous electrolyte was prepared in an argon box.

<Production of Battery>

A nonaqueous electrolytic solution was injected into a container housing the electrode group. Then, the open portion of the peripheral edge of the container was heat-sealed to seal the container. As a result, a battery having outer dimensions of 11 cm × 8 cm × 0.3 cm and inner dimensions (dimensions of a sealed portion) of 9 cm × 7 cm × 0.25 cm without including positive and negative electrode terminals (also referred to as positive and negative electrode tabs) was obtained. This battery is referred to as a first sealed battery.

<Initial Charging>

Initial charging and discharging were performed by performing the following initial charging and initial discharging. The first sealed battery was subjected to the initial charging in an environment of 25°C according to the following procedure. First, the first sealed battery was charged at a constant current (CC) of 0.2 C until the voltage reached 3 V. The first sealed battery was then charged at a constant voltage (CV) of 3 V. The constant-voltage charging was terminated when the total time of the constant-current charging and the constant-voltage charging reached 10 hours.

<Initial Discharging>

Next, the first sealed battery was discharged at a constant current (CC) of 0.2 C in an environment of 25°C until the voltage reached 1.5 V.

<Post-treatment>

Next, the first sealed battery after the initial charging and discharging was charged at a constant current (CC) of 0.2 C in an environment of 25°C until the voltage reached 2.31 V. Next, the first sealed battery was charged at a constant voltage (CV) of 2.31 V until the current value reached 1/20 C. That is, the first sealed battery was subjected to constant-current and constant-voltage (CCCV) charging. As a result, the SOC of the first sealed battery was 60%. The first sealed battery was subjected to aging. The aging was performed by holding the first sealed battery at 50°C for 6 hours in a thermostatic chamber. Thereafter, the first sealed battery was put in an argon box, and a single site of the sealed portion of the container member was cut to release the gas in the container member. The edge opened by cutting was sealed by heat sealing. In this way, the secondary battery according to Example 1 was produced.

(Examples 2 to 7, 9, and 10)

A secondary battery was produced in the same manner as in Example 1 except that the positive electrode active material was changed as shown in Tables 2 and 3.

(Example 8)

A positive electrode active material Li $(Ni_{0.5}Mn_{1.5})O_4$ used in Example 8 is a 5 V-based positive electrode active

material having a spinel-type crystal structure.

In a secondary battery of Example 8, since $Li(Ni_{0.5}Mn_{1.5})O_4$ was used as a positive electrode active material, charging and discharging conditions from initial charging to post-treatment were as follows.

<Initial Charging>

The first sealed battery was subjected to the initial charging in an environment of 25°C according to the following procedure. First, the first sealed battery was charged at a constant current (CC) of 0.2 C until the voltage reached 3.7 V. The first sealed battery was then charged at a constant voltage (CV) of 3.7 V. The constant-voltage charging was terminated when the total time of the constant-current charging and the constant-voltage charging reached 10 hours.

<Initial Discharging>

Next, the first sealed battery was discharged at a constant current (CC) of 0.2 C in an environment of 25°C until the voltage reached 2.5 V.

<Post-treatment>

Next, the first sealed battery was discharged at a constant current (CC) of 0.2 C in an environment of 25°C until the voltage reached 3.7 V. Next, the first sealed battery was charged at a constant voltage (CV) of 3.7 V until the current value reached 1/20 C. That is, the first sealed battery was subjected to constant-current and constant-voltage (CCCV) charging. As a result, the SOC of the first sealed battery was 60%. The aging was performed by holding the first sealed battery at 80°C for 24 hours in a thermostatic chamber. The secondary battery according to Example 8 was produced in the same manner as in Example 1 in the subsequent steps.

(Examples 11, 13, and 14)

A secondary battery was produced in the same manner as in Example 1 except that the negative electrode active material was changed as shown in Table 3.

(Example 12)

The negative electrode active material was changed to C (graphite) as shown in Table 3. The graphite powder and polyvinylidene fluoride (PVdF) were mixed in proportions of 90% by mass and 10% by mass, respectively, and the obtained mixture was kneaded in the presence of an organic solvent (N-methylpyrrolidone), whereby a slurry is prepared. The obtained slurry was applied to a current collector made of copper foil having a thickness of 15 μm, dried, and pressed to obtain a negative electrode. In addition, in the case of using a negative electrode containing graphite, steps from initial charging to post-treatment were performed as follows to prepare a secondary battery.

<Initial Charging>

The first sealed battery was subjected to the initial charging in an environment of 25°C according to the following procedure. First, the first sealed battery was charged at a constant current (CC) of 0.2 C until the voltage reached 4.15 V. The first sealed battery was then charged at a constant voltage (CV) of 4.15 V. The constant-voltage charging was terminated when the total time of the constant-current charging and the constant-voltage charging reached 10 hours.

<Initial Discharging>

Next, the first sealed battery was discharged at a constant current (CC) of 0.2 C in an environment of 25°C until the voltage reached 2 V.

<Post-treatment>

Next, the first sealed battery after the initial charging and discharging was charged at a constant current (CC) of 0.2 C in an environment of 25°C until the voltage reached 3.46 V. Next, the first sealed battery was charged at a constant voltage (CV) of 3.46 V until the current value reached 1/20 C. That is, the first sealed battery was subjected to constant-current and constant-voltage (CCCV) charging. As a result, the SOC of the first sealed battery was 60%. The first sealed battery was subjected to aging. The aging was performed by holding the first sealed battery at 50°C for 6 hours in a

thermostatic chamber. Thereafter, the first sealed battery was put in an argon box, and a single site of the sealed portion of the container member was cut to release the gas in the container member. The edge opened by cutting was sealed by heat sealing. In this way, the secondary battery according to Example 12 was produced.

(Example 15)

A secondary battery according to Example 15 was produced in the same manner as in Example 1 except that the following points were changed in the post-treatment.

First, a sultone compound solution was prepared. The sultone compound solution was prepared in the same manner as the liquid nonaqueous electrolyte described in Example 1 except that the concentration of 1,3-propane sultone as the sultone compound was 5% by mass.

In the post-treatment, the first sealed battery after being subjected to aging was put in an argon box, and a single site of the sealed portion of the container member was cut to remove the gas in the container member.

A sultone compound solution was added into the first sealed battery after degassing such that the concentration of 1,3-propane sultone (PS) in the nonaqueous electrolyte in the first sealed battery was 5.0% by mass. The edge opened by cutting was sealed by heat sealing.

(Example 16)

A secondary battery was produced in the same manner as in Example 1 except that ethyl butyrate (EB) was used instead of propyl propionate (PP) in the preparation of the nonaqueous electrolyte.

(Example 17)

A secondary battery was produced in the same manner as in Example 1 except that pentyl propionate was used instead of propyl propionate (PP) in the preparation of the nonaqueous electrolyte.

(Examples 18 and 19)

A secondary battery was produced in the same manner as in Example 1 except that the aging temperature in the post-treatment was set as shown in Table 7.

(Examples 20 and 21)

A secondary battery was produced in the same manner as in Example 1 except that the aging time in the post-treatment was as shown in Table 7.

(Example 22)

In the post-treatment, the first sealed battery after the initial charging and discharging was charged at a constant current (CC) of 0.2 C in an environment of 25°C until the voltage reached 2.25 V. Next, the first sealed battery was charged at a constant voltage (CV) of 2.25 V until the current value reached 1/20 C. That is, the first sealed battery was subjected to constant-current and constant-voltage (CCCV) charging. As a result, the SOC of the first sealed battery was 50%. A secondary battery was produced in the same manner as in Example 1 except for the above.

(Example 23)

In the post-treatment, the first sealed battery after the initial charging and discharging was charged at a constant current (CC) of 0.2 C in an environment of 25°C until the voltage reached 2.43 V. Next, the first sealed battery was charged at a constant voltage (CV) of 2.43 V until the current value reached 1/20 C. That is, the first sealed battery was subjected to constant-current and constant-voltage (CCCV) charging. As a result, the SOC of the first sealed battery was 70%. A secondary battery was produced in the same manner as in Example 1 except for the above.

(Example 24)

A secondary battery was produced in the same manner as in Example 1 except that in the preparation of the nonaqueous electrolyte, the concentrations of propylene carbonate (PC), propyl propionate (PP), $LiPF_6$, and 1,3-propane sultone in the liquid nonaqueous electrolyte were changed to 77% by mass, 12% by mass, 10% by mass, and 1.0% by

mass, respectively.

(Example 25)

A secondary battery was produced in the same manner as in Example 23 except that in the post-treatment, the aging temperature and the aging time were set as shown in Table 7.

(Example 26)

In the preparation of the nonaqueous electrolyte, the concentrations of propylene carbonate (PC), propyl propionate (PP), $LiPF_6$, and 1,3-propane sultone in the liquid nonaqueous electrolyte were changed to 25% by mass, 60% by mass, 10% by mass, and 5.0% by mass, respectively. In the post-treatment, the aging temperature and the aging time were as shown in Table 7. A secondary battery was produced in the same manner as in Example 22 except for the above.

(Example 27)

In the preparation of the nonaqueous electrolyte, the concentrations of propylene carbonate (PC), propyl propionate (PP), $LiPF_6$, and 1,3-propane sultone in the liquid nonaqueous electrolyte were changed to 3% by mass, 90% by mass, 6% by mass, and 1.0% by mass, respectively.

In the post-treatment, the first sealed battery after the initial charging and discharging was charged at a constant current (CC) of 0.2 C in an environment of 25°C until the voltage reached 2.28 V. Next, the first sealed battery was charged at a constant voltage (CV) of 2.28 V until the current value reached 1/20 C. That is, the first sealed battery was subjected to constant-current and constant-voltage (CCCV) charging. As a result, the SOC of the first sealed battery was 55%. The aging temperature and the aging time were as shown in Table 7. A secondary battery was produced in the same manner as in Example 1 except for the above.

(Example 28)

In the preparation of the nonaqueous electrolyte, the concentrations of propylene carbonate (PC), propyl propionate (PP), $LiPF_6$, and 1,3-propane sultone in the liquid nonaqueous electrolyte were changed to 1% by mass, 95% by mass, 3% by mass, and 1.0% by mass, respectively. A secondary battery was produced in the same manner as in Example 1 except for the above.

(Comparative Example 1)

A secondary battery was produced in the same manner as in Example 1 except that diethyl carbonate (DEC) was used instead of propyl propionate (PP) in the preparation of the nonaqueous electrolyte.

(Comparative Example 2)

A secondary battery was produced in the same manner as in Example 1 except that the aging temperature in the post-treatment was set as shown in Table 7.

(Comparative Example 3)

In the preparation of the nonaqueous electrolyte, the concentrations of propylene carbonate (PC), propyl propionate (PP), $LiPF_6$, and 1,3-propane sultone in the liquid nonaqueous electrolyte were changed to 29.5% by mass, 60% by mass, 10% by mass, and 0.5% by mass, respectively. The aging time in the post-treatment was as described in Table 7. A secondary battery was produced in the same manner as in Example 1 except for the above.

(Comparative Example 4)

In the post-treatment, the first sealed battery after the initial charging and discharging was charged at a constant current (CC) of 0.2 C in an environment of 25°C until the voltage reached 3 V. Next, the first sealed battery was charged at a constant voltage (CV) of 3 V until the current value reached 1/20 C. That is, the first sealed battery was subjected to constant-current and constant-voltage (CCCV) charging. As a result, the SOC of the first sealed battery was 100%. A secondary battery was produced in the same manner as in Example 1 except for the above.

(Comparative Example 5)

A secondary battery was produced in the same manner as in Example 1 except that aging was not performed in the post-treatment.

<Gas Chromatography Mass Spectrometry>

The nonaqueous electrolyte contained in the secondary battery of each of Examples and Comparative Examples was subjected to the gas chromatography mass spectrometry described above. An area A within the range in which the retention time is 15 minutes or more and 18 minutes or less, an area B within the range in which the retention time is 13.5 minutes or more and 14.5 minutes or less, an area C within the range in which the retention time is 11.5 minutes or more and 12.5 minutes or less, the values of B/A and C/A, and the concentration E (mol/L) of the sultone compound in the nonaqueous electrolyte are shown in Tables 8 and 9.

<Measurement of Mass of Sulfur Atoms per Unit Volume of Active Material-Containing Layer>

For each of the secondary batteries of Examples and Comparative Examples, the mass M of sulfur atoms per unit volume of the positive electrode active material-containing layer was measured by the ICP emission spectrometry described above. In addition, the concentration E of the sultone compound in the nonaqueous electrolyte previously measured was divided by M to calculate the value of E/M. The values of the mass M of sulfur atoms per unit volume of the positive electrode active material-containing layer and E/M are shown in Tables 8 and 9.

<High Temperature Cycle Performance Test>

Each of the secondary batteries of Examples and Comparative Examples was subjected to a high-temperature cycle performance test as follows.

First, the secondary battery was charged at a constant current (CC) of 0.2 C in an environment of 70°C until the voltage reached 3 V. Next, the secondary battery was charged at a constant voltage (CV) of 3 V until the current value reached 1/20 C. That is, the secondary battery was subjected to constant-current and constant-voltage (CCCV) charging, and the SOC of the secondary battery was set to 100%. Thereafter, the battery was discharged at a constant current (CC) of 1 C, and the discharge capacity was measured. The constant-current and constant-voltage (CCCV) charging and the constant-current (CC) discharging described above were treated as one cycle, and were repeated 400 times. The discharge capacity at the first cycle and the discharge capacity at the 400th cycle were measured.

The value obtained by dividing the discharge capacity at the 400th cycle by the discharge capacity at the first cycle was multiplied by 100 to calculate a 400-cycle retention rate (%).

The 400-cycle retention rate obtained by the high temperature cycle performance test described above is an index of life performance at a high temperature.

Tables 2 to 5 show the type of the positive electrode active material, the type of the negative electrode active material, the concentration (% by mass) of the sultone compound, the type of the ester compound, and the concentration (% by mass) of the ester compound before the production of the secondary battery of the nonaqueous electrolyte in each of Examples and Comparative Examples. In the tables, "PP" described in the column of "type of ester compound" represents propyl propionate. In Example 15, the concentration (% by mass) of the sultone compound in the nonaqueous electrolyte after the addition of the sultone compound solution after the aging is also shown.

Tables 6 and 7 show the aging temperature, the aging time, and the SOC (%) at the time of the aging in the post-treatment in each of Examples and Comparative Examples. In Comparative Example 5 in which aging was not performed, the columns of the aging temperature (°C) and the SOC (%) at the time of the aging were indicated by "-".

Tables 8 to 9 show the area A within the range in which the retention time is 15 minutes or more and 18 minutes or less, the area B within the range in which the retention time is 13.5 minutes or more and 14.5 minutes or less, B/A, the mass M ($g/m^3$) of sulfur atoms per unit volume of the positive electrode active material-containing layer, the concentration E (mol/L) of the sultone compound in the nonaqueous electrolyte, and E/M in the each of the secondary batteries after the post-treatment in each of Examples and Comparative Examples.

Tables 10 and 11 show the area C within the range in which the retention time is 11.5 minutes or more and 12.5 minutes or less, C/A, the concentration (% by mass) of the ester compound in the electrolyte, and the 400-cycle retention rate (%) in each of Examples and Comparative Examples.

Table 2

| | Type of positive electrode active material | Type of negative electrode active material | Concentration of sultone compound (% by mass) | Type of ester compound | Concentration of ester compound (% by mass) |
|---|---|---|---|---|---|
| Example 1 | $LaNi_{0.8}Co_{0.1}Mn_{0.1}O_2$ | $Nb_2TiO_7$ | 1 | PP | 60 |
| Example 2 | $Li\text{-}Ni_{0.5}Co_{0.2}Mn_{0.3}O_2$ | $Nb_2TiO_7$ | 1 | PP | 60 |
| Example 3 | $Li\text{-}Ni_{0.6}Co_{0.2}Mn_{0.2}O_2$ | $Nb_2TiO_7$ | 1 | PP | 60 |
| Example 4 | $Li\text{-}Ni_{0.5}Co_{0.3}Mn_{0.2}O_2$ | $Nb_2TiO_7$ | 1 | PP | 60 |
| Example 5 | $LiMn_2O_4$ | $Nb_2TiO_7$ | 1 | PP | 60 |
| Example 6 | $LiFePO_4$ | $Nb_2TiO_7$ | 1 | PP | 60 |
| Example 7 | $LiNi_{0.8}Co_{0.15}Al_{0.03}O_2$ | $Nb_2TiO_7$ | 1 | PP | 60 |
| Example 8 | $Li(Ni_{0.5}Mn_{1.5})O_4$ | $Nb_2TiO_7$ | 1 | PP | 60 |

Table 3

| | Type of positive electrode active material | Type of negative electrode active material | Concentration of sultone compound(% by mass) | Type of ester compound | Concentration of ester compound (% by mass) |
|---|---|---|---|---|---|
| Example 9 | $Li(Ni_{1/3}Mn_{1/3}Co_{1/3})O_2$ | $Nb_2TiO_7$ | 1 | PP | 60 |
| Example 10 | $LiCoO_2$ | $Nb_2TiO_7$ | 1 | PP | 60 |
| Example 11 | $LiNi_{0.8}Co_{0.1}Mn_{0.1}O_2$ | $Li_4Ti_5O_{12}$ | 1 | PP | 60 |
| Example 12 | $LiNi_{0.8}Co_{0.1}Mn_{0.1}O_2$ | C (graphite) | 1 | PP | 60 |
| Example 13 | $LiNi_{0.8}Co_{0.1}Mn_{0.1}O_2$ | $Li_2Na_{1.8}Ti_{5.8}Nb_{0.014}O_{14}$ | 1 | PP | 60 |
| Example 14 | $LiNi_{0.8}Co_{0.1}Mn_{0.1}O_2$ | $TiO_2$ | 1 | PP | 60 |
| Example 15 | $LiNi_{0.8}Co_{0.1}Mn_{0.1}O_2$ | $Nb_2TiO_7$ | 1.0, 5.0 after addition | PP | 60 |
| Example 16 | $LiNi_{0.8}Co_{0.1}Mn_{0.1}O_2$ | $Nb_2TiO_7$ | 1 | Ethyl buty-rate | 60 |

Table 4

| | Type of positive electrode active material | Type of negative electrode active material | Concentration of sultone compound (% by mass) | Type of ester compound | Concentration of ester compound (% by mass) |
|---|---|---|---|---|---|
| Example 17 | $LiNi_{0.8}Co_{0.1}Mn_{0.1}O_2$ | $Nb_2TiO_7$ | 1 | Pentyl propionate | 60 |
| Example 18 | $LiNi_{0.8}Co_{0.1}Mn_{0.1}O_2$ | $Nb_2TiO_7$ | 1 | PP | 60 |
| Example 19 | $LiNi_{0.8}Co_{0.1}Mn_{0.1}O_2$ | $Nb_2TiO_7$ | 1 | PP | 60 |
| Example 20 | $LiNi_{0.8}Co_{0.1}Mn_{0.1}O_2$ | $Nb_2TiO_7$ | 1 | PP | 60 |
| Example 21 | $LiNi_{0.8}Co_{0.1}Mn_{0.1}O_2$ | $Nb_2TiO_7$ | 1 | PP | 60 |

(continued)

| | Type of positive electrode active material | Type of negative electrode active material | Concentration of sultone compound (% by mass) | Type of ester compound | Concentration of ester compound (% by mass) |
|---|---|---|---|---|---|
| Example 22 | $LiNi_{0.8}Co_{0.1}Mn_{0.1}O_2$ | $Nb_2TiO_7$ | 1 | PP | 60 |
| Example 23 | $LiNi_{0.8}Co_{0.1}Mn_{0.1}O_2$ | $Nb_2TiO_7$ | 1 | PP | 60 |
| Example 24 | $LiNi_{0.8}Co_{0.1}Mn_{0.1}O_2$ | $Nb_2TiO_7$ | 1 | PP | 12 |

Table 5

| | Type of positive electrode active ma terial | Type of negative electrode active material | Concentration of sultone compound (% by mass) | Type of ester compound | Concentration of ester compound (% by mass) |
|---|---|---|---|---|---|
| Example 25 | $LiNi_{0.8}Co_{0.1}Mn_{0.1}O_2$ | $Nb_2TiO_7$ | 1 | PP | 60 |
| Example 26 | $LiNi_{0.8}Co_{0.1}Mn_{0.1}O_2$ | $Nb_2TiO_7$ | 5 | PP | 60 |
| Example 27 | $LiNi_{0.8}Co_{0.1}Mn_{0.1}O_2$ | $Nb_2TiO_7$ | 1 | PP | 90 |
| Example 28 | $LiNi_{0.8}Co_{0.1}Mn_{0.1}O_2$ | $Nb_2TiO_7$ | 1 | PP | 95 |
| Comparative Example 1 | $LiNi_{0.8}Co_{0.1}Mn_{0.1}O_2$ | $Nb_2TiO_7$ | 1 | DEC | 60 |
| Comparative Example 2 | $LiNi_{0.8}Co_{0.1}Mn_{0.1}O_2$ | $Nb_2TiO_7$ | 0.5 | PP | 60 |
| Comparative Example 3 | $LiNi_{0.8}Co_{0.1}Mn_{0.1}O_2$ | $Nb_2TiO_7$ | 0.5 | PP | 60 |
| Comparative Example 4 | $LiNi_{0.8}Co_{0.1}Mn_{0.1}O_2$ | $Nb_2TiO_7$ | 0.5 | PP | 60 |
| Comparative Example 5 | $LiNi_{0.8}Co_{0.1}Mn_{0.1}O_2$ | $Nb_2TiO_7$ | 1 | PP | 60 |

Table 6

| | Aging temperature (°C) | Aging time (hour) | SOC (%) at time of aging |
|---|---|---|---|
| Example 1 | 50 | 6 | 60 |
| Example 2 | 50 | 6 | 60 |
| Example 3 | 50 | 6 | 60 |
| Example 4 | 50 | 6 | 60 |
| Example 5 | 50 | 6 | 60 |
| Example 6 | 50 | 6 | 60 |
| Example 7 | 50 | 6 | 60 |
| Example 8 | 50 | 6 | 60 |
| Example 9 | 50 | 6 | 60 |
| Example 10 | 50 | 6 | 60 |
| Example 11 | 50 | 6 | 60 |
| Example 12 | 50 | 6 | 60 |
| Example 13 | 50 | 6 | 60 |
| Example 14 | 50 | 6 | 60 |
| Example 15 | 50 | 6 | 60 |

(continued)

| | Aging temperature (°C) | Aging time (hour) | SOC (%) at time of aging |
|---|---|---|---|
| Example 16 | 50 | 6 | 60 |

Table 7

| | Aging temperature (°C) | Aging time (hour) | SOC (%) at time of aging |
|---|---|---|---|
| Example 17 | 50 | 6 | 60 |
| Example 18 | 30 | 6 | 60 |
| Example 19 | 60 | 6 | 60 |
| Example 20 | 50 | 3 | 60 |
| Example 21 | 50 | 12 | 60 |
| Example 22 | 50 | 6 | 50 |
| Example 23 | 50 | 6 | 70 |
| Example 24 | 50 | 6 | 60 |
| Example 25 | 60 | 12 | 70 |
| Example 26 | 30 | 3 | 50 |
| Example 27 | 35 | 5 | 55 |
| Example 28 | 50 | 6 | 60 |
| Comparative Example 1 | 50 | 6 | 60 |
| Comparative Example 2 | 100 | 6 | 60 |
| Comparative Example 3 | 50 | 50 | 60 |
| Comparative Example 4 | 50 | 6 | 100 |
| Comparative Example 5 | - | 0 | - |

Table 8

| | Area A | Area B | B/A | M ($g/m^3$) | Concentration E (mol/L) | E/M |
|---|---|---|---|---|---|---|
| Example 1 | 558666000 | 11787.726 | 0.000311 | 1520 | 0.041 | $3x10^{-5}$ |
| Example 2 | 558665000 | 191063.43 | 0.000342 | 1525 | 0.039 | $3\times10^{-5}$ |
| Example 3 | 558664000 | 175979.16 | 0.000315 | 1530 | 0.037 | $2\times10^{-5}$ |
| Example 4 | 558665000 | 190504.765 | 0.000341 | 1521 | 0.0385 | $3\times10^{-5}$ |
| Example 5 | 558661000 | 192179.384 | 0.000344 | 1515 | 0.0415 | $3\times10^{-5}$ |
| Example 6 | 558662000 | 196090.362 | 0.000351 | 1513 | 0.038 | $3\times10^{-5}$ |
| Example 7 | 558666000 | 173745.126 | 0.000311 | 1500 | 0.0385 | $3\times10^{-5}$ |
| Example 8 | 558650000 | 286028.8 | 0.000512 | 3000 | 0.0355 | $1\times10^{-5}$ |
| Example 9 | 558661000 | 179888.842 | 0.000322 | 1518 | 0.042 | $3\times10^{-5}$ |
| Example 10 | 558667000 | 182684.109 | 0.000327 | 1519 | 0.0415 | $3\times10^{-5}$ |
| Example 11 | 558762000 | 230209.944 | 0.000412 | 1510 | 0.0425 | $3\times10^{-5}$ |
| Example 12 | 558861000 | 175482.354 | 0.000314 | 1521 | 0.0395 | $3\times10^{-5}$ |
| Example 13 | 557761000 | 264936.475 | 0.000475 | 1530 | 0.0365 | $2\times10^{-5}$ |
| Example 14 | 558961000 | 210169.336 | 0.000376 | 1521 | 0.041 | $3\times10^{-5}$ |
| Example 15 | 558666000 | 11787.726 | 0.000311 | 1520 | 0.082 | $5\times10^{-5}$ |

(continued)

| | Area A | Area B | B/A | M ($g/m^3$) | Concentration E (mol/L) | E/M |
|---|---|---|---|---|---|---|
| Example 16 | 558665000 | 175979.475 | 0.000315 | 1520 | 0.041 | $3\times10^{-5}$ |

Table 9

| | Area A | Area B | B/A | M ($g/m^3$) | Concentration E (mol/L) | E/M |
|---|---|---|---|---|---|---|
| Example 17 | 558664000 | 174303.168 | 0.000312 | 1521 | 0.04 | $3\times10^{-5}$ |
| Example 18 | 558861000 | 167658.3 | 0.0003 | 1505 | 0.051 | $3\times10^{-5}$ |
| Example 19 | 558561000 | 230127.132 | 0.000412 | 1540 | 0.025 | $2\times10^{-5}$ |
| Example 20 | 558761000 | 162040.69 | 0.00029 | 1510 | 0.043 | $3\times10^{-5}$ |
| Example 21 | 558562000 | 173154.22 | 0.00031 | 1535 | 0.03 | $2\times10^{-5}$ |
| Example 22 | 558762000 | 156453.36 | 0.00028 | 1515 | 0.045 | $3\times10^{-5}$ |
| Example 23 | 558761000 | 162040.69 | 0.00029 | 1526 | 0.032 | $2\times10^{-5}$ |
| Example 24 | 558662000 | 527376.928 | 0.000944 | 1560 | 0.016 | $1\times10^{-5}$ |
| Example 25 | 558661000 | 223464.4 | 0.0004 | 1000 | 0.001 | $1\times10^{-6}$ |
| Example 26 | 558751000 | 167066.549 | 0.000299 | 389 | 0.35 | $9\times10^{-4}$ |
| Example 27 | 4270000000 | 161551 | 0.000289 | 1500 | 0.051 | $3\times10^{-5}$ |
| Example 28 | 559899000 | 166849.902 | 0.000298 | 1505 | 0.051 | $3\times10^{-5}$ |
| Comparative Example 1 | 558888000 | 0 | 0 | 1700 | 0.005 | $3\times10^{-6}$ |
| Comparative Example 2 | 559898000 | 167969.4 | 0.0003 | 1429 | 0.001 | $7\times10^{-7}$ |
| Comparative Example 3 | 558990000 | 162107.1 | 0.00029 | 1875 | 0.0015 | $8\times10^{-7}$ |
| Comparative Example 4 | 558880000 | 167664 | 0.0003 | 2111 | 0.0019 | $9\times10^{-7}$ |
| Comparative Example 5 | 600000000 | 10000 | 0.000017 | 70 | 0.08 | $1x10^{-3}$ |

Table 10

| | Area C | C/A | Concentratio n of ester compound in electrolyte (% by mass) | 400-cycle retention rate (%) |
|---|---|---|---|---|
| Example 1 | 1382000 | 0.0247 | 48 | 85 |
| Example 2 | 1381000 | 0.0247 | 49 | 84 |
| Example 3 | 1381000 | 0.0247 | 50 | 86 |
| Example 4 | 1381000 | 0.0025 | 49 | 83 |
| Example 5 | 1383000 | 0.0025 | 53 | 85 |
| Example 6 | 1384000 | 0.0025 | 52 | 86 |
| Example 7 | 1382000 | 0.0025 | 48 | 85 |
| Example 8 | 1388000 | 0.0025 | 49 | 83 |
| Example 9 | 1381000 | 0.0025 | 53 | 82 |
| Example 10 | 1381000 | 0.0025 | 46 | 84 |
| Example 11 | 1385000 | 0.0025 | 44 | 85 |
| Example 12 | 1394000 | 0.0025 | 43 | 85 |
| Example 13 | 1391000 | 0.0025 | 45 | 83 |
| Example 14 | 1391000 | 0.0025 | 42 | 84 |
| Example 15 | 1382000 | 0.0025 | 48 | 93 |

(continued)

| | Area C | C/A | Concentratio n of ester compound in electrolyte (% by mass) | 400-cycle retention rate (%) |
|---|---|---|---|---|
| Example 16 | 1382000 | 0.0025 | 48 | 84 |

Table 11

| | Area C | C/A | Concentration of ester compound in electrolyte (% by mass) | 400-cycle retention rate (%) |
|---|---|---|---|---|
| Example 17 | 1381000 | 0.0025 | 47 | 85 |
| Example 18 | 1380000 | 0.0025 | 52 | 89 |
| Example 19 | 1392000 | 0.0025 | 40 | 79 |
| Example 20 | 1381000 | 0.0025 | 53 | 88 |
| Example 21 | 1391000 | 0.0025 | 44 | 80 |
| Example 22 | 1382000 | 0.0025 | 52 | 87 |
| Example 23 | 1390000 | 0.0025 | 43 | 81 |
| Example 24 | 1381000 | 0.0025 | 10 | 81 |
| Example 25 | 1388000 | 0.0025 | 42 | 78 |
| Example 26 | 1370000 | 0.0025 | 51 | 90 |
| Example 27 | 1281000 | 0.0003 | 72 | 89 |
| Example 28 | 1370000 | 0.0024 | 90 | 87 |
| Comparative Example 1 | 1382000 | 0.0025 | 0 | 60 |
| Comparative Example 2 | 1390000 | 0.0025 | 50 | 61 |
| Comparative Example 3 | 1382000 | 0.0025 | 52 | 62 |
| Comparative Example 4 | 1381000 | 0.0025 | 53 | 63 |
| Comparative Example 5 | 582000 | 0.00097 | 57 | 60 |

The following was found from Tables 2 to 11.

In all of Examples 1 to 28, the 400-cycle retention rates were higher than those in Comparative Examples 1 to 5. From this, it has become clear that the secondary battery according to the approach can improve the life performance at a high temperature.

From Examples 1 to 10, it has become clear that the life performance at a high temperature can be improved even when the type of the positive electrode active material is changed. In addition, from Examples 1 and 11 to 14, it has become clear that the life performance at a high temperature can be improved even when the type of the negative electrode active material is changed.

From Example 15, it has become clear that even when a solution containing the sultone compound is added to the nonaqueous electrolyte after the initial charging and discharging and the aging, the life performance at a high temperature can be improved.

From Examples 1, 16, and 17, it has become clear that the life performance at a high temperature can be improved even when the type of the ester compound represented by Chemical Formula (2) is changed.

It has become clear that even when the aging conditions are variously changed as in Examples 1 and 18 to 23, a secondary battery in which B/A is in the range of 0 to 0.000944 and E/M is in the range of $1 \times 10^{-6}$ to $9 \times 10^{-4}$ can be obtained, and the life performance at a high temperature can be improved. Comparison among Examples 1, 18, and 19 has revealed that the lower the aging temperature, the lower the value of B/A tends to be.

According to at least one of these approaches or examples, there is provided a secondary battery including a positive electrode, a negative electrode, and a nonaqueous electrolyte. The positive electrode includes a positive electrode active material-containing layer containing sulfur atoms. The nonaqueous electrolyte contains a sultone compound and a cyclic carbonate. In gas chromatography mass spectrometry of the nonaqueous electrolyte, in a total ion chromatogram in which a detection intensity is plotted on a vertical axis and a retention time is plotted on a horizontal axis, a ratio B/A of an area B within a range in which the retention time is 13.5 minutes or more and 14.5 minutes or less to an

area A within a range in which the retention time is 15 minutes or more and 18 minutes or less is in a range of 0 to 0.000944. The following Expression (1) is satisfied.

$$\text{Expression (1): } 1 \times 10^{-6} \leq E/M \leq 9 \times 10^{-4}$$

In Expression (1), M denotes a mass ($g/m^3$) of sulfur atoms per unit volume of the positive electrode active material-containing layer. E denotes a concentration (mol/L) of the sultone compound in the nonaqueous electrolyte. Therefore, it is possible to provide a secondary battery having high life performance at a high temperature.

Hereinafter, the invention according to the approaches will be additionally described.

<1> A secondary battery including a positive electrode, a negative electrode, and a nonaqueous electrolyte, in which

the positive electrode includes a positive electrode active material-containing layer containing sulfur atoms,
the nonaqueous electrolyte contains a sultone compound and a cyclic carbonate,
in gas chromatography mass spectrometry of the nonaqueous electrolyte, in a total ion chromatogram in which a detection intensity is plotted on a vertical axis and a retention time is plotted on a horizontal axis, a ratio B/A of an area B within a range in which the retention time is 13.5 minutes or more and 14.5 minutes or less to an area A within a range in which the retention time is 15 minutes or more and 18 minutes or less is 0 or more and 0.000944 or less, and
the secondary battery satisfies Expression (1) below.

$$\text{Expression (1): } 1 \times 10^{-6} \leq E/M \leq 9 \times 10^{-4}$$

In Expression (1), M denotes a mass ($g/m^3$) of the sulfur atoms per unit volume of the positive electrode active material-containing layer, and E denotes a concentration (mol/L) of the sultone compound in the nonaqueous electrolyte.

<2> The secondary battery according to clause <1>, in which in the total ion chromatogram, a ratio C/A of an area C within a range in which the retention time is 11.5 minutes or more and 12.5 minutes or less to the area A is 0.0003 or more.
<3> The secondary battery according to clause <1> or clause <2>, in which the nonaqueous electrolyte further contains an ester compound represented by Chemical Formula (2) below. Chemical Formula (2):

Chem. 3

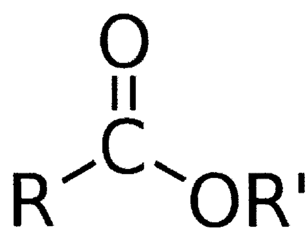

In Chemical Formula (2), R denotes a first hydrocarbon group, and R' denotes a second hydrocarbon group containing three or more carbon atoms.
<4> The secondary battery according clause <3>, in which the nonaqueous electrolyte contains 10% by mass or more and 90% by mass or less of the ester compound.
<5> A battery pack including the secondary battery according to any one of clauses <1> to <4>.
<6> The battery pack according to clause <5>, further including:

an external power distribution terminal; and
a protective circuit.

<7> The battery pack according to clause <5> or clause <6>, further including a plurality of the secondary battery, wherein
the plurality of secondary batteries are electrically connected in series, in parallel, or in combination of series and

parallel.
<8> A vehicle including the battery pack according to any one of clauses <5> to <7>.
<9> The vehicle according to clause <8>, further including a mechanism that converts kinetic energy of the vehicle into regenerative energy.

While certain approaches have been described, these approaches have been presented by way of example only, and are not intended to limit the scope of the inventions. Indeed, the novel approaches described herein may be embodied in a variety of other forms; furthermore, various omissions, substitutions and changes in the form of the approaches described herein may be made without departing from the spirit of the inventions. The accompanying claims and their equivalents are intended to cover such forms or modifications as would fall within the scope and spirit of the inventions.

## Claims

1. A secondary battery (31) comprising a positive electrode (3), a negative electrode (4), and a nonaqueous electrolyte, wherein

    the positive electrode includes a positive electrode active material-containing layer(3b) containing sulfur atoms,
    the nonaqueous electrolyte contains a sultone compound and a cyclic carbonate,
    in gas chromatography mass spectrometry of the nonaqueous electrolyte, in a total ion chromatogram in which a detection intensity is plotted on a vertical axis and a retention time is plotted on a horizontal axis,
    a ratio B/A of an area B to an area A is 0 or more and 0.000944 or less, where the area A is an area within a range in which the retention time is 13.5 minutes or more and 14.5 minutes or less and the area B is an area within a range in which the retention time is 15 minutes or more and 18 minutes or less, and
    the secondary battery satisfies Expression (1) below:

    $$\text{Expression (1)}: 1 \times 10^{-6} \le E/M \le 9 \times 10^{-4}$$

    where M denotes a mass ($g/m^3$) of the sulfur atoms per unit volume of the positive electrode active material-containing layer, and E denotes a concentration (mol/L) of the sultone compound in the nonaqueous electrolyte.

2. The secondary battery (31) according to claim 1, wherein in the total ion chromatogram, a ratio C/A of an area C within a range in which the retention time is 11.5 minutes or more and 12.5 minutes or less to the area A is 0.0003 or more.

3. The secondary battery (31) according to claim 1 or 2, wherein the nonaqueous electrolyte further contains an ester compound represented by Chemical Formula (2) below: Chemical Formula (2):

    Chem. 1

    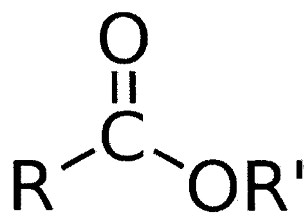

    where R denotes a first hydrocarbon group, and R' denotes a second hydrocarbon group containing three or more carbon atoms.

4. The secondary battery according to claim 3, wherein the nonaqueous electrolyte contains 10% by mass or more and 90% by mass or less of the ester compound.

5. A battery pack (50) comprising the secondary battery according to any one of claims 1 to 4.

6. The battery pack (50) according to claim 5, further comprising:

an external power distribution terminal (57); and
a protective circuit (56).

**7.** The battery pack (50) according to claim 5 or 6, further comprising a plurality of the secondary battery (31), wherein the plurality of secondary batteries are electrically connected in series, in parallel, or in combination of series and parallel.

**8.** A vehicle (300) comprising the battery pack (50) according to any one of claims 5 to 7.

**9.** The vehicle (300) according to claim 8, further comprising a mechanism that converts kinetic energy of the vehicle (300) into regenerative energy.

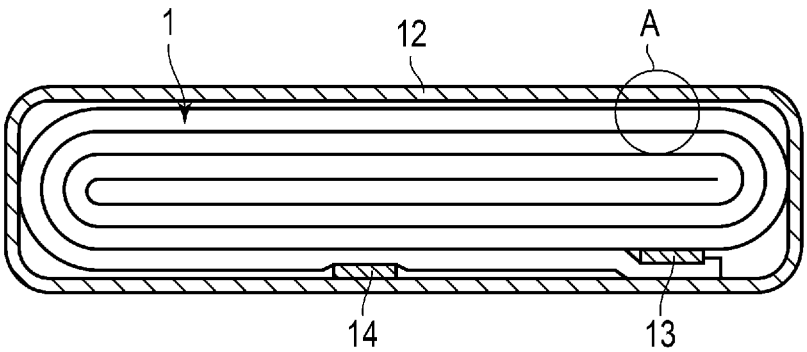


F I G. 1

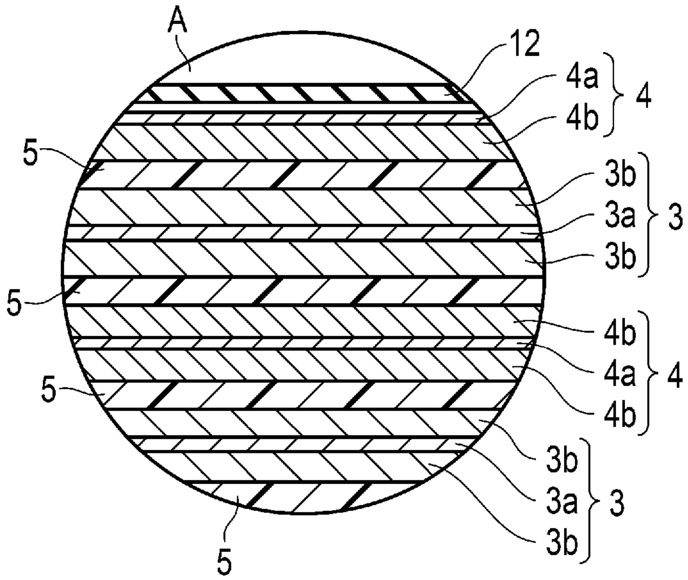


F I G. 2

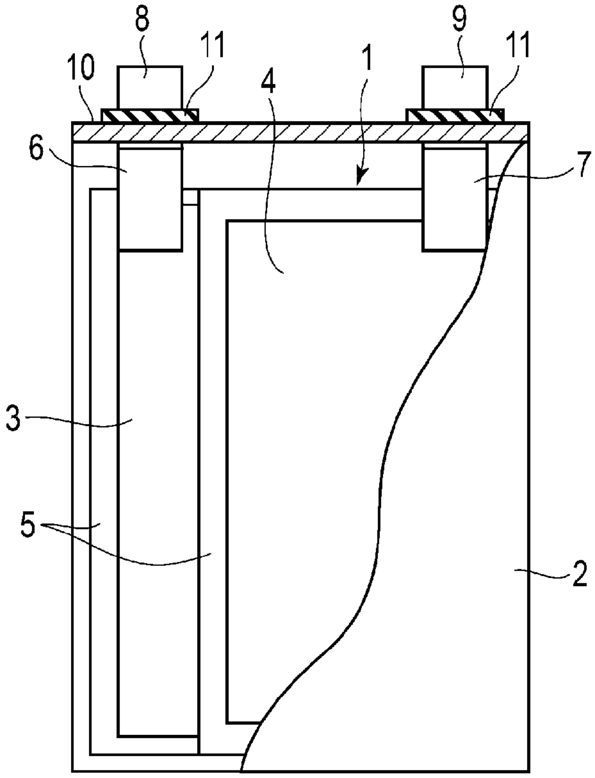


F I G. 3

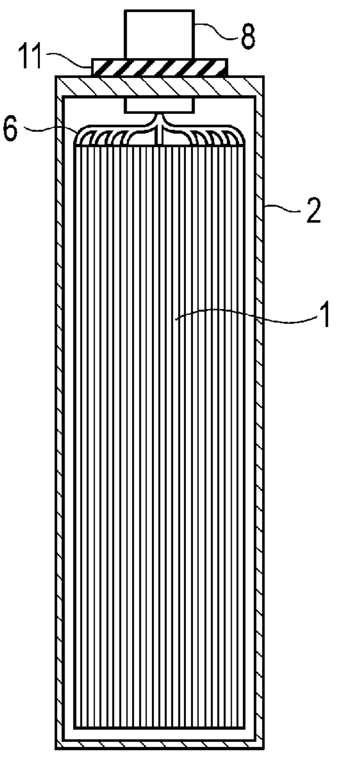


F I G. 4

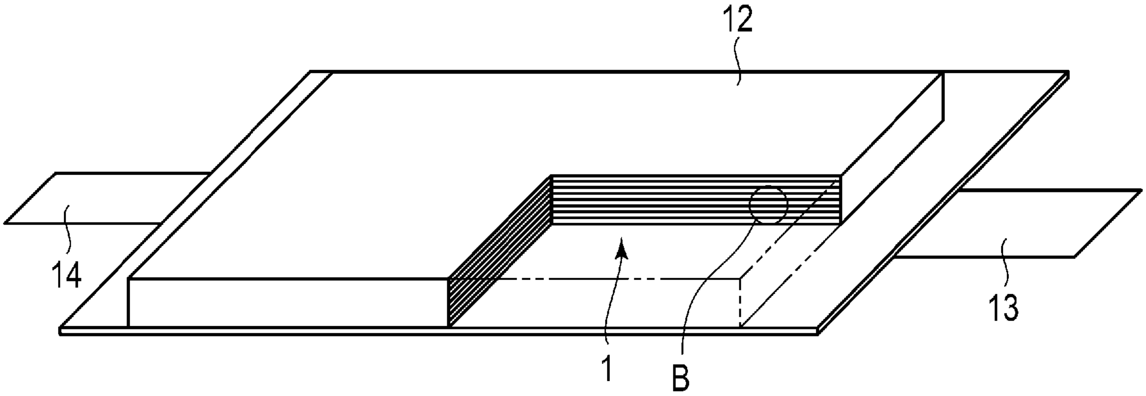


F I G. 5

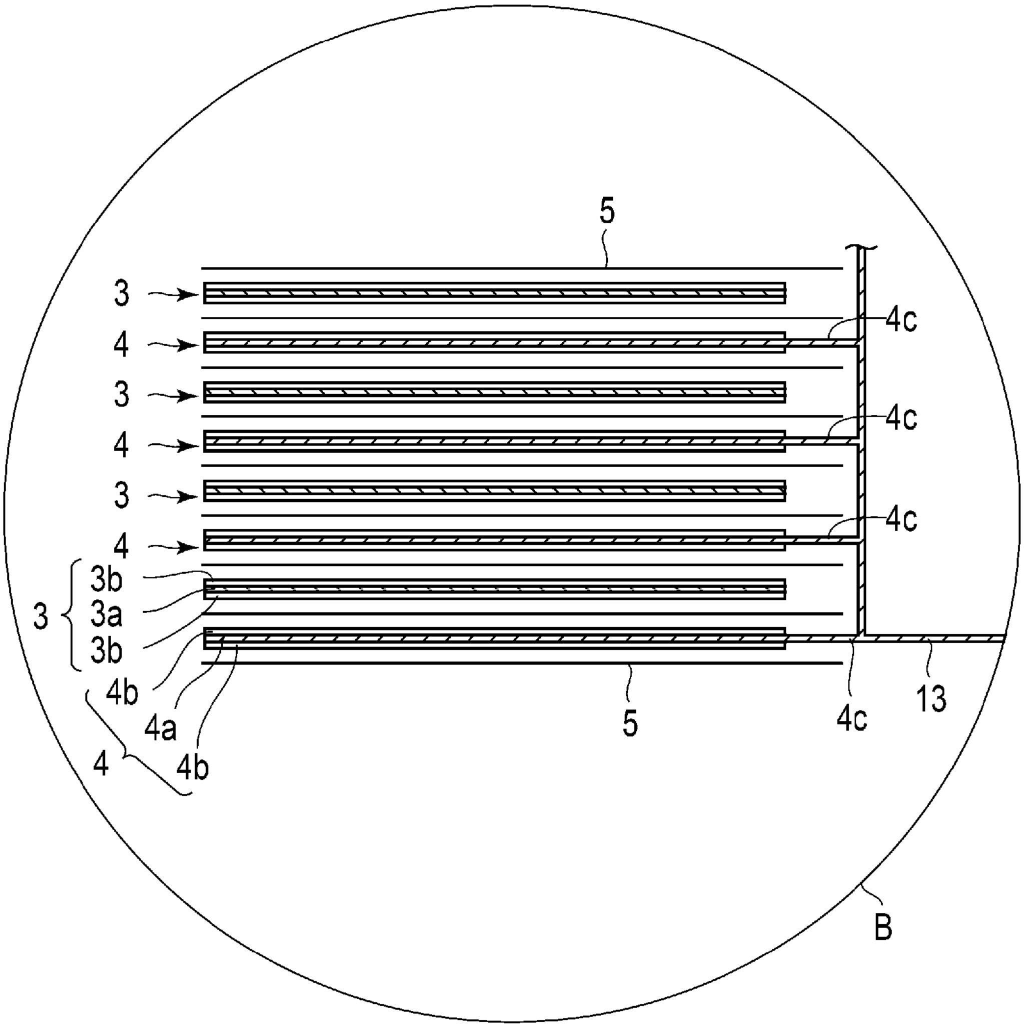


F I G. 6

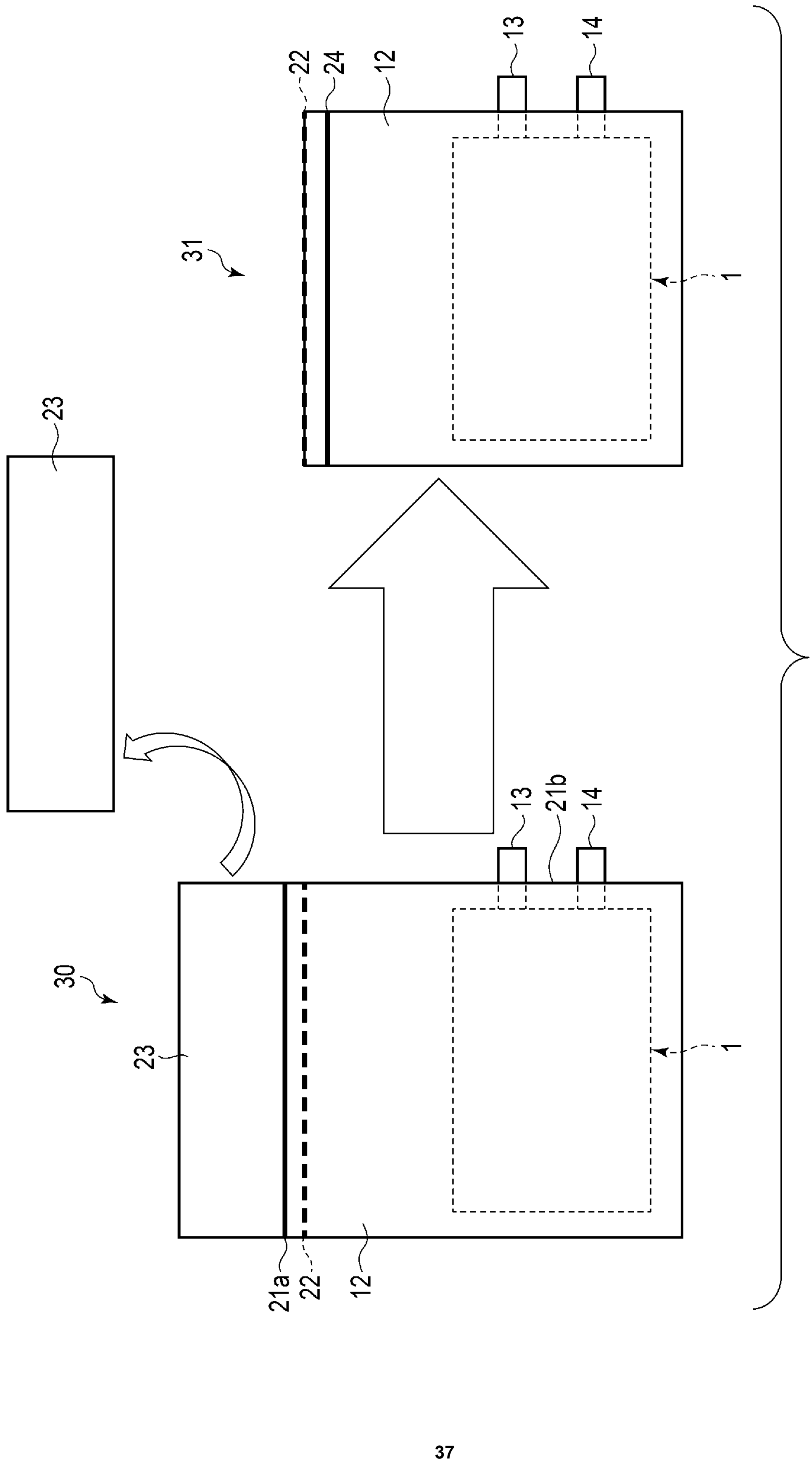


FIG. 7

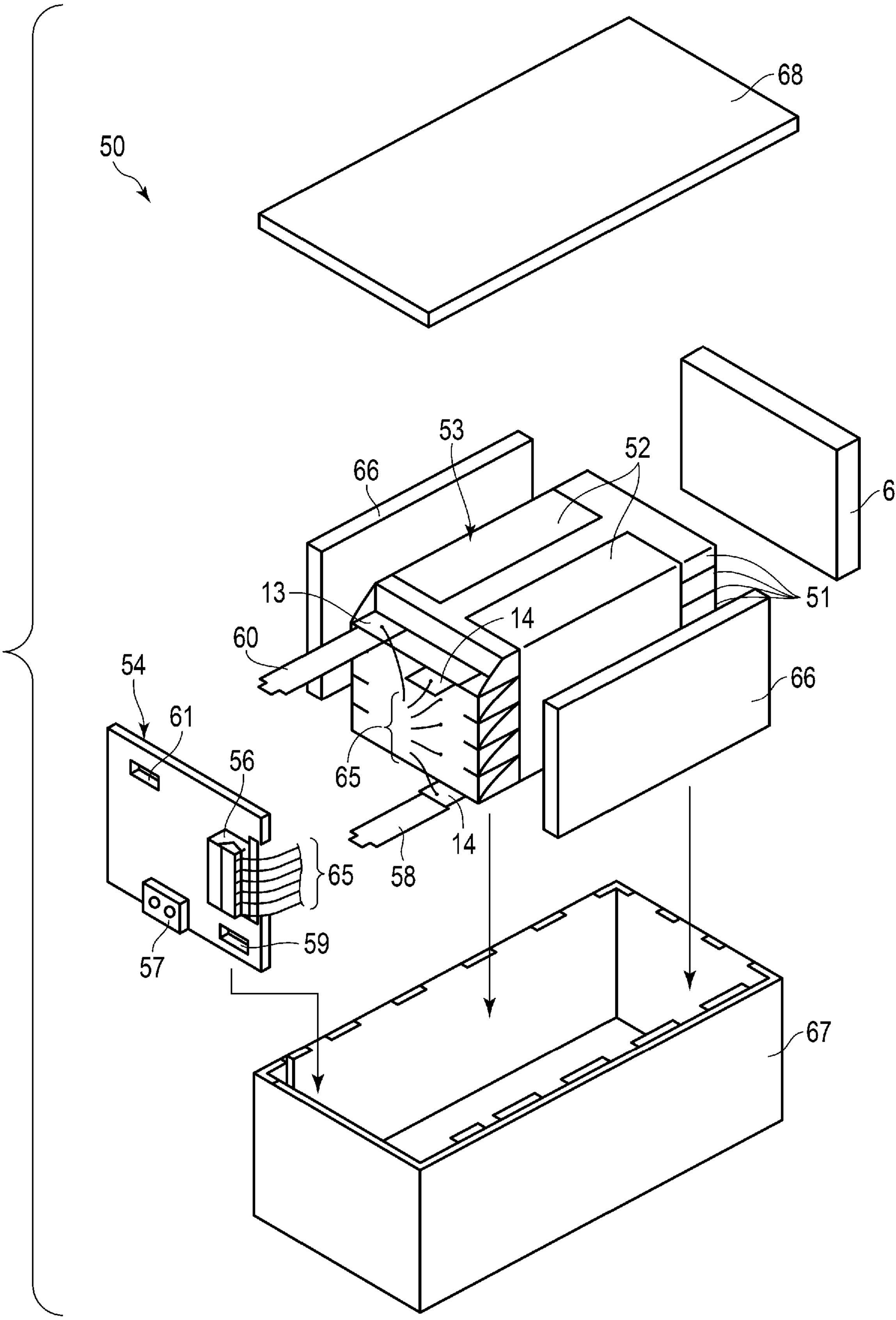


F I G. 8

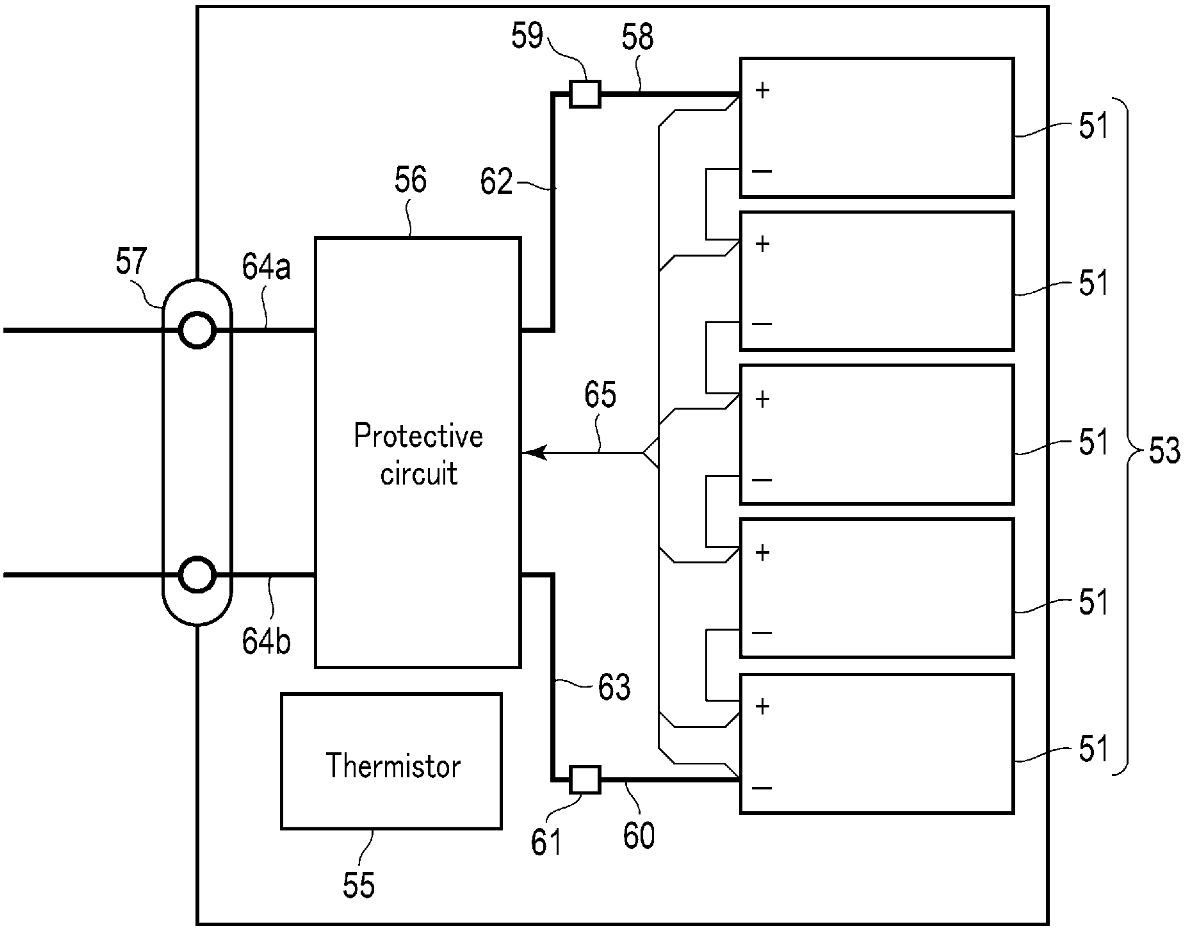
59
58
56
62
57
64a
51
Protective
circuit
65
53
64b
63
Thermistor
61
60
55

F I G. 9

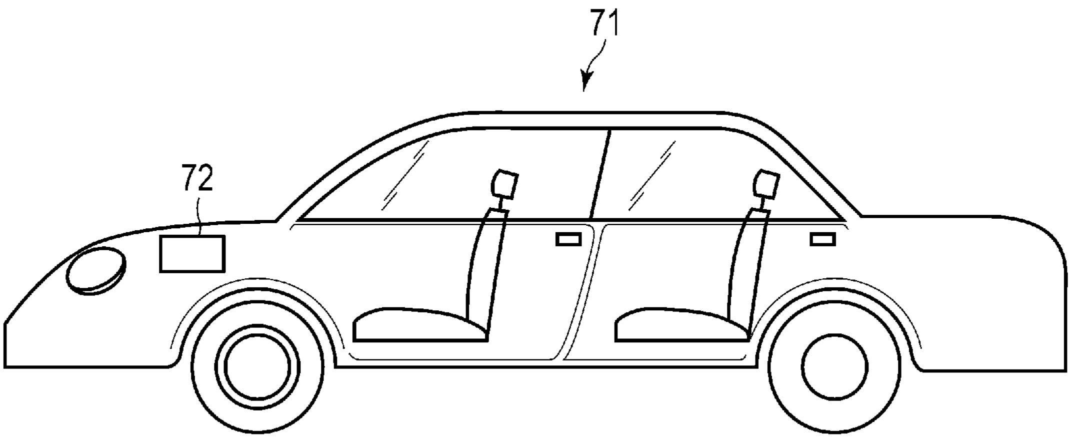
71
72

F I G. 10

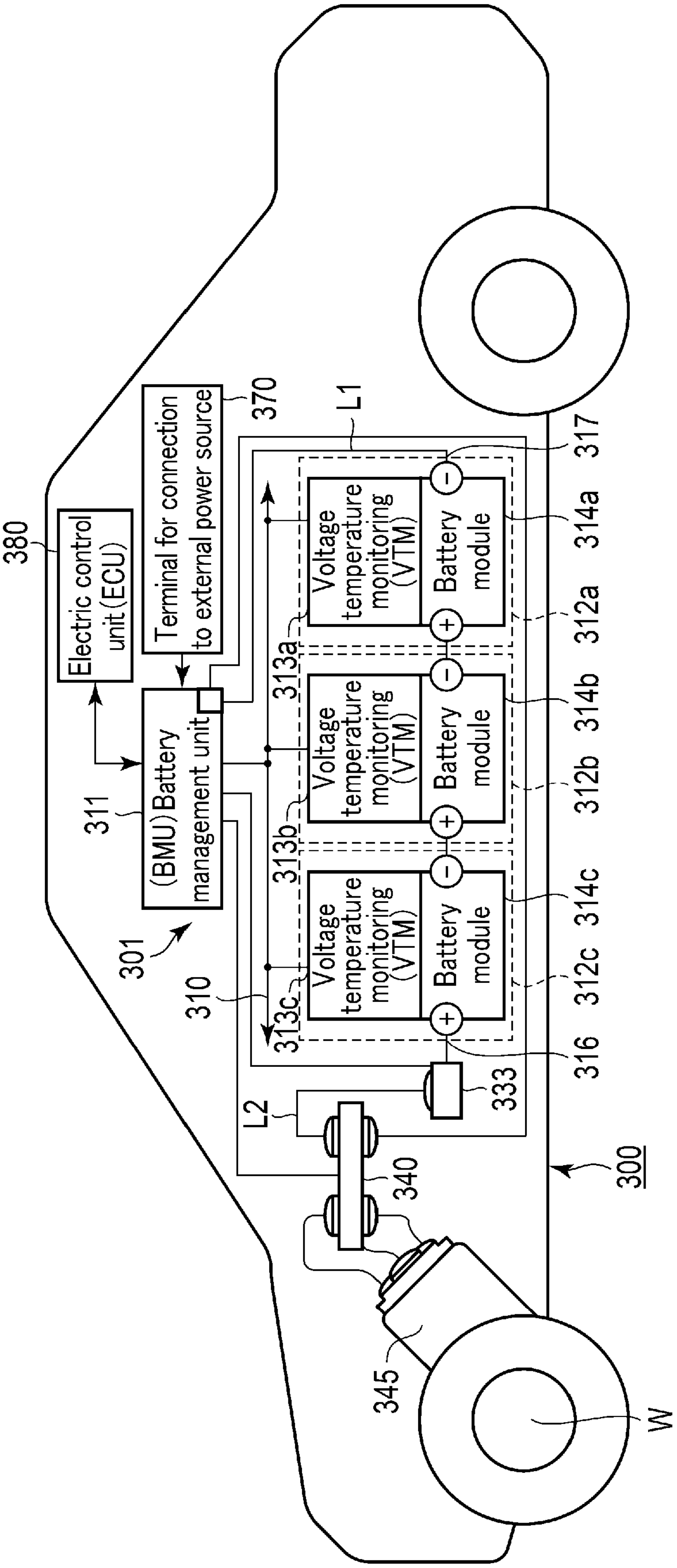
380
Electric control unit (ECU)
Terminal for connection to external power source
370
L1
317
311
(BMU) Battery management unit
Voltage temperature monitoring (VTM)
Battery module
314a
312a
313a
314b
312b
313b
314c
312c
313c
301
310
316
333
L2
340
300
345
W

FIG. 11

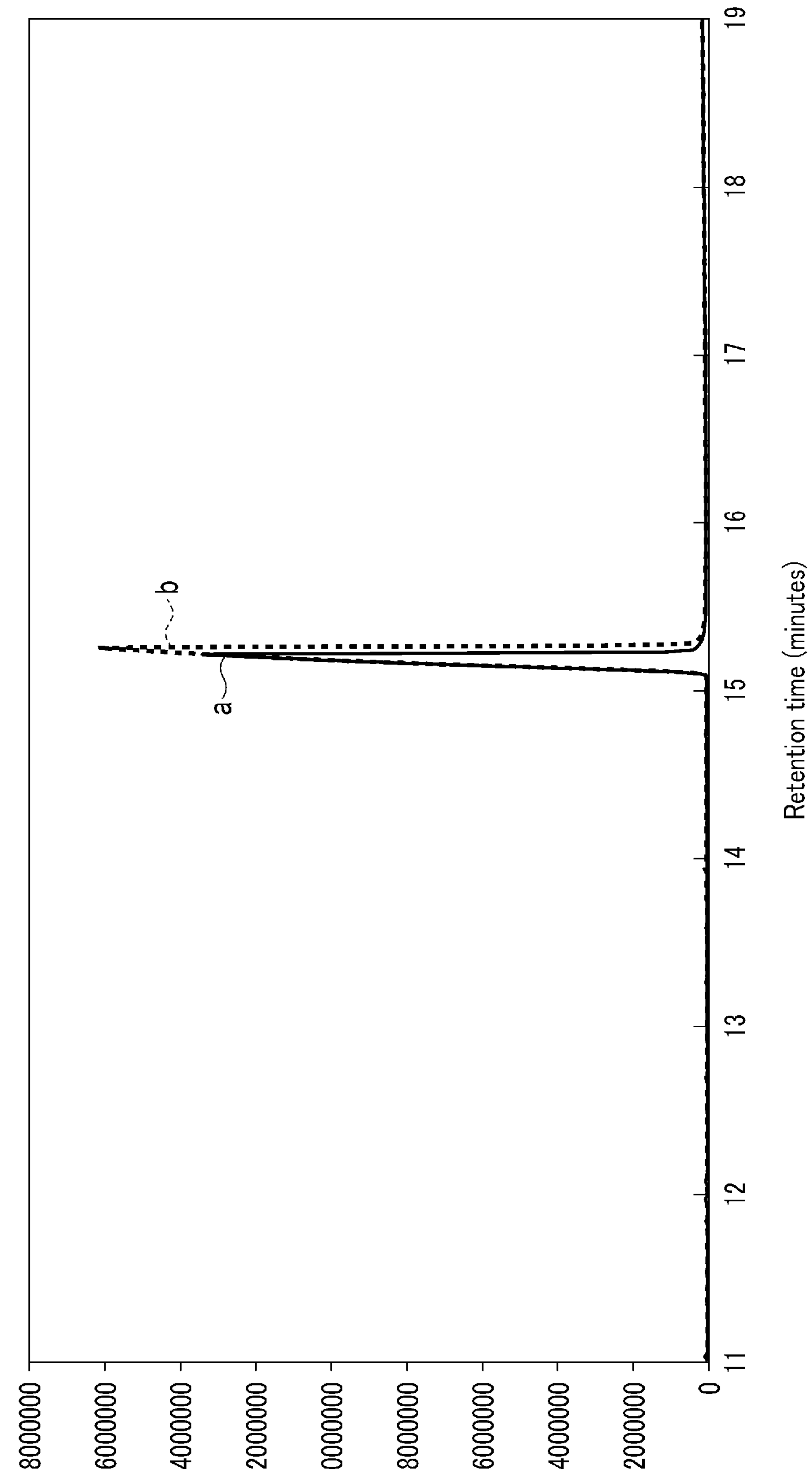
Detection intensity
18000000
16000000
14000000
12000000
10000000
8000000
6000000
4000000
2000000
0
11
12
13
14
15
16
17
18
19
Retention time (minutes)
a
b

FIG. 12

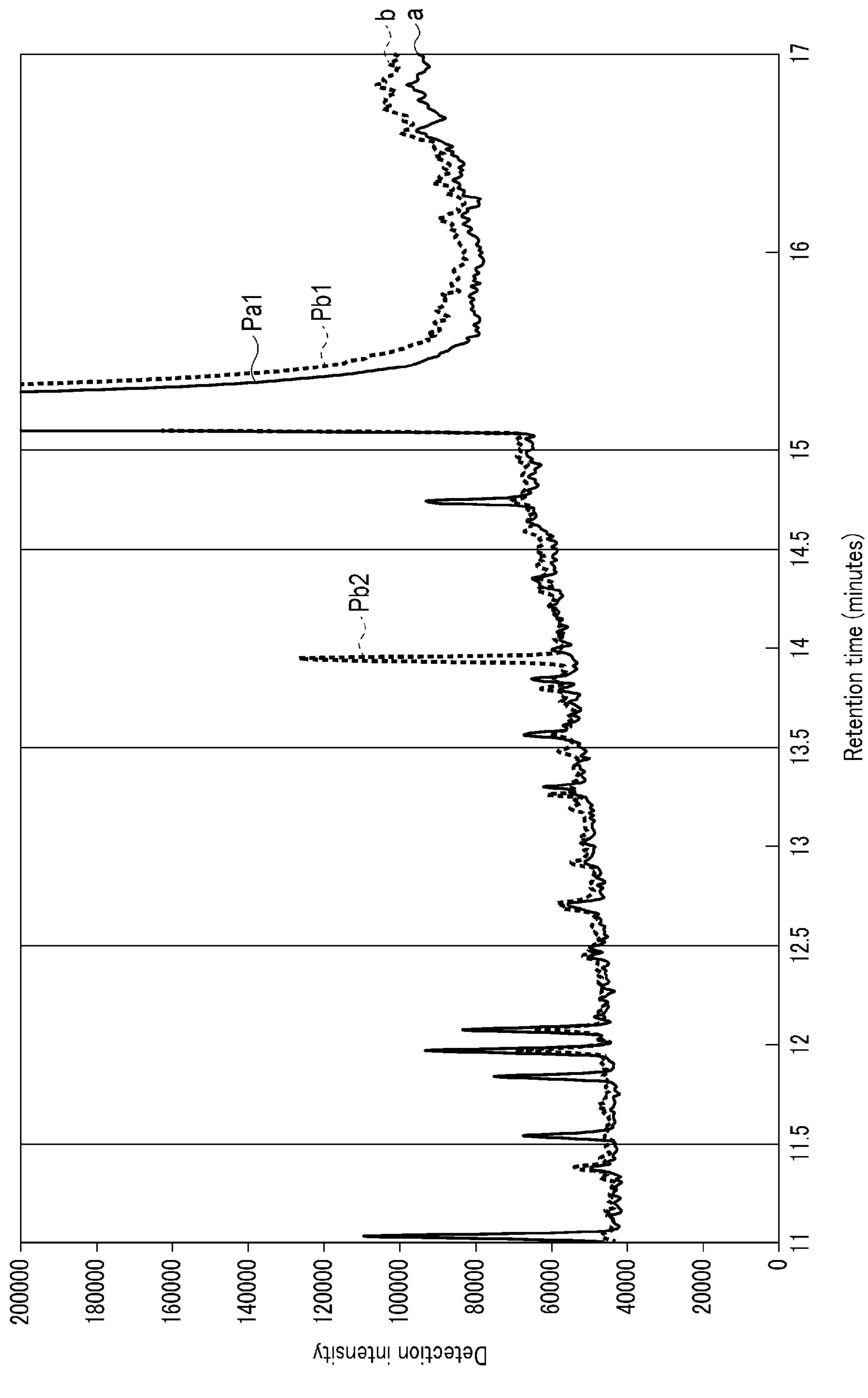
Detection intensity
200000
180000
160000
140000
120000
100000
80000
60000
40000
20000
0
11
11.5
12
12.5
13
13.5
14
14.5
15
16
17
Retention time (minutes)
Pa1
Pb1
Pb2
a
b

FIG. 13

Europäisches Patentamt
European Patent Office
Office européen des brevets

# EUROPEAN SEARCH REPORT

Application Number
EP 25 15 8173

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>Y | US 2023/299345 A1 (TOSHIBA K.K.) 21 September 2023 (2023-09-21)<br>* paragraph [0016] - paragraph [0022] *<br>* paragraph [0056] - paragraph [0062] *<br>* paragraph [0064] - paragraph [0069] *<br>* paragraph [0085] - paragraph [0088] *<br>* paragraph [0104] - paragraph [0106] *<br>* paragraph [0119] - paragraph [0120] *<br>* examples 1-17; tables 1, 5 *<br>* examples 18-27; tables 2, 6 *<br>* examples 1-10; table 3 *<br>* examples 18-27; table 4 *<br>* examples 31-33; tables 9, 11 *<br>* claims 1-3, 10-14 *<br>----- | 1,2,5-9<br><br>3,4 | INV.<br>H01M4/131<br>H01M10/0525<br>H01M10/0567<br>H01M10/0569<br>B60L50/64<br><br>ADD.<br>H01M4/02<br>H01M10/42 |
| Y<br><br>A | US 2023/020044 A1 (MURATA MANUFACTURING CO., LTD.) 19 January 2023 (2023-01-19)<br>* paragraph [0005] - paragraph [0013] *<br>* paragraph [0055] - paragraph [0057] *<br>* paragraph [0064] - paragraph [0067] *<br>* paragraph [0075] - paragraph [0077] *<br>* paragraph [0128] - paragraph [0131] *<br>* examples 1-55 *<br>* claims 1, 2, 5 *<br>----- | 3,4<br><br>1,2,5-9 | TECHNICAL FIELDS SEARCHED (IPC)<br>H01M<br>B60L |
| A | D. XU ET AL: "Exploring synergetic effects of vinylene carbonate and 1,3-propane sultone on LiNi0.6Mn0.2Co0.2O2/graphite cells with excellent high-temperature performance", JOURNAL OF POWER SOURCES, vol. 437, 31 July 2019 (2019-07-31), XP085770274, ISSN: 0378-7753, DOI: 10.1016/J.JPOWSOUR.2019.226929 [retrieved on 2019-07-31]<br>* the whole document *<br>* figures 6, 7 *<br>----- | 1-9 | |

-/--

The present search report has been drawn up for all claims

1

| Place of search | Date of completion of the search | Examiner |
|---|---|---|
| Munich | 29 July 2025 | Masson, Jean-Pierre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 25 15 8173

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP 6 311256 B2 (NISSAN MOTOR CO., LTD.) 18 April 2018 (2018-04-18)<br>* abstract *<br>* examples 1-12; table 1 *<br>* claims 1-6 *<br>----- | 1-9 | |

TECHNICAL FIELDS SEARCHED (IPC)

The present search report has been drawn up for all claims

1

| Place of search | Date of completion of the search | Examiner |
|---|---|---|
| Munich | 29 July 2025 | Masson, Jean-Pierre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................
& : member of the same patent family, corresponding document

EPO FORM 1503 03.82 (P04C01)

# ANNEX TO THE EUROPEAN SEARCH REPORT ON EUROPEAN PATENT APPLICATION NO. EP 25 15 8173

This annex lists the patent family members relating to the patent documents cited in the above-mentioned European search report. The members are as contained in the European Patent Office EDP file on
The European Patent Office is in no way liable for these particulars which are merely given for the purpose of information.

29-07-2025

| Patent document cited in search report | Publication date | Patent family member(s) | Publication date |
|---|---|---|---|
| US 2023299345 A1 | 21-09-2023 | NONE | |
| US 2023020044 A1 | 19-01-2023 | CN 115336062 A | 11-11-2022 |
| | | JP 7380841 B2 | 15-11-2023 |
| | | JP WO2021192401 A1 | 30-09-2021 |
| | | US 2023020044 A1 | 19-01-2023 |
| | | WO 2021192401 A1 | 30-09-2021 |
| JP 6311256 B2 | 18-04-2018 | JP 6311256 B2 | 18-04-2018 |
| | | JP 2015069702 A | 13-04-2015 |



For more details about this annex : see Official Journal of the European Patent Office, No. 12/82